# EUROPEAN PATENT SPECIFICATION

(11) **EP 4 436 289 B1**
(45) Date of publication and mention of the grant of the patent: **28.01.2026**
(21) Application number: 22929671.0
(22) Date of filing: 29.12.2022
(51) Int. Cl.: H04W 72/04, H04L 5/00, H04L 1/1812, H04L 1/1867, H04W 72/11

(54) **SEMI-PERSISTENT SCHEDULING METHODS AND USER EQUIPMENT**
SEMIPERSISTENTE PLANUNGSVERFAHREN UND BENUTZERGERÄTE
PROCÉDÉS DE PLANIFICATION SEMI-PERSISTANTE ET ÉQUIPEMENTS UTILISATEUR

(30) Priority: 01.03.2022 CN 202210196172
(43) Date of publication of application: 25.09.2024
(73) Proprietor: Honor Device Co., Ltd., Shenzhen, Guangdong 518040 (CN)
(72) Inventor: ZHANG, Jian, Shenzhen, Guangdong 518040 (CN)
(74) Representative: Goddar, Heinz J.
(86) International application number: PCT/CN2022/143540
(87) International publication number: WO 2023/165247

(56) References cited:
- EP-A1- 3 419 363
- WO-A1-2020/204491
- CN-A- 107 333 334
- CN-A- 109 417 791
- CN-A- 110 050 500
- US-A1- 2021 360 653
- VIVO: "Challenges and potential enhancements of XR", vol. RAN WG1, no. e-Meeting; 20210125 - 20210205, 18 January 2021 (2021-01-18), XP051970398, Retrieved from the Internet <URL:https://ftp.3gpp.org/tsg_ran/WG1_RL1/TSGR1_104-e/Docs/R1-2100479.zip R1-2100479 Challenges and potential enhancements of XR.docx> [retrieved on 20210118]
- "3rd Generation Partnership Project; Technical Specification Group Radio Access Network; Evolved Universal Terrestrial Radio Access (E-UTRA); Medium Access Control (MAC) protocol specification (Release 16)", 27 September 2021 (2021-09-27), XP052054321, Retrieved from the Internet <URL:https://ftp.3gpp.org/3guInternal/3GPP_ultimate_versions_to_be_transposed/sentToDpc/36321-g60.zip 36321-g60.docx> [retrieved on 20210927]
- ERICSSON: "SPS support for eMTC UEs in Rel-13", 3GPP TSG-RAN WG2 #93BIS TDOC R2-162838, 2 April 2016 (2016-04-02), XP051082588

## Description

### TECHNICAL FIELD

This application relates to the field of communication technologies, and in particular, to semi-persistent scheduling methods and user equipment.

### BACKGROUND

Semi-persistent scheduling (Semi-Persistent Scheduling, SPS) is also referred to as semi-static scheduling. Dynamic scheduling may be that a base station (gNB) allocates radio resources to user equipment (User Equipment, UE) in each scheduling periodicity (for example, a TTI) (through a physical downlink control channel (Physical Downlink Control Channel, PDCCH)). Unlike dynamic scheduling, the SPS allows a semi-static configuration of radio resources and periodic allocation of the configured resources to specific UE. In other words, the SPS features one-time allocation and multiple-use, and a gNB does not need to configure radio resources for the UE at each TTI. This reduces PDCCH overheads. Therefore, the SPS can be well adapted to services with periodic characteristics, such as an extended reality (eXtended Reality, XR) service.

However, at present, a TTI of the SPS needs to be set based on a subcarrier spacing (SubCarrier Space, SCS), whereas a minimum granularity of the SCS is usually 0.5 ms. Consequently, there is a problem that an SPS periodicity does not match a periodicity of the XR service. That the SPS periodicity does not match the periodicity of the XR service results in power consumption of the UE and a waste of resources such as a system capacity of the base station, and a problem of undesirable user experience due to a delay.
EP 3 419 363 A1 discloses that awireless device receives at least one message. The at least one message comprises an uplink semi persistent scheduling (SPS) radio network temporary identifier (RNTI), and a sequence of at least one uplink SPS information element (IE). An uplink SPS IE of the sequence comprises: at least one uplink SPS configuration parameter comprising an uplink SPS interval, and an SPS configuration index for the at least one uplink SPS configuration parameter. A downlink control information (DCI) corresponding to the uplink SPS RNTI may be received. The DCI comprises a first SPS configuration index of one of the at least one uplink SPS IE. At least one transport block may be transmitted employing at least one first uplink SPS configuration parameter corresponding to the first SPS configuration index.

### SUMMARY

To resolve the foregoing technical problems, this application provides semi-persistent scheduling methods and user equipment, with a purpose of making a semi-persistent scheduling periodicity match a periodicity of a service with a periodic characteristic, so that impact of a delay on user experience is reduced, power consumption of the user equipment is reduced, and decrease in a system capacity of the base station is avoided. The invention is defined by the subject-matter of the independent claims. Further embodiments of the invention are set out in the dependent claims.

### BRIEF DESCRIPTION OF DRAWINGS

FIG. 1 illustrates a communication network architecture;
FIG. 2 illustrates a schematic diagram of a hardware structure of user equipment;
FIG. 3 illustrates a schematic diagram 1 in which an SPS periodicity does not match a periodicity of an XR service;
FIG. 4 illustrates a schematic diagram 2 in which an SPS periodicity does not match a periodicity of an XR service;
FIG. 5 illustrates a sequence diagram 1 of activating SPS based on a semi-persistent scheduling method according to an embodiment of this application by using DCI;
FIG. 6 illustrates a sequence diagram 2 of activating SPS based on a semi-persistent scheduling method according to an embodiment of this application by using DCI;
FIG. 7 illustrates a schematic diagram in which an SPS periodicity matches a periodicity of an XR service;
FIG. 8 illustrates a sequence diagram 1 of activating uplink SPS based on a semi-persistent scheduling method according to an embodiment of this application by using RRC;
FIG. 9 illustrates a schematic diagram of an agreed periodicity configuration identifier;
FIG. 10 illustrates a sequence diagram 2 of activating uplink SPS based on a semi-persistent scheduling method according to an embodiment of this application by using RRC;
FIG. 11 illustrates a sequence diagram 1 of a semi-persistent scheduling method according to an embodiment of this application;
FIG. 12 illustrates a schematic flowchart 1 of a semi-persistent scheduling method according to an embodiment of this application;
FIG. 13 illustrates a schematic flowchart 2 of a semi-persistent scheduling method according to an embodiment of this application; and
FIG. 14 illustrates a sequence diagram 2 of a semi-persistent scheduling method according to an embodiment of this application.

### DESCRIPTION OF EMBODIMENTS

The following clearly and completely describes technical solutions in embodiments of this application with reference to accompanying drawings in embodiments of this application. It is clear that the described embodiments are some but not all embodiments of this application. All other embodiments obtained by a person of ordinary skill in the art based on embodiments of this application without creative efforts shall fall within the protection scope of this application.

A term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, terms such as "first" and "second" are intended to distinguish between different objects but do not indicate a particular order of the objects. For example, a first target object and the second target object are used to distinguish between different target objects, but not to describe a particular order of the target objects.

In embodiments of this application, a word "example", "for example", or the like is used to represent giving an example, an illustration, or a description. Any embodiment or design scheme described as "example" or "for example" in embodiments of this application should not be construed as being preferred or having more advantages over other embodiments or design schemes. Exactly, use of the word "example", "for example", or the like is intended to present a related concept in a specific manner.

In descriptions of embodiments of this application, unless otherwise specified, "a plurality of" means at least two. For example, a plurality of processing units mean at least two processing units, and a plurality of systems mean at least two systems.

Before the technical solutions in embodiments of this application are described, a communication system to which embodiments of this application are applicable is first described by using examples.

For example, embodiments of this application are applicable to but not limited to the following communication systems: a narrowband-internet of things (Narrow Band-Internet Of Things, NB-IoT) system, a wireless local access network (Wireless Local Access Network, WLAN) system, a long term evolution (Long Term Evolution, LTE) system, a vehicle to X (vehicle to X, V2X) system, a 5th generation mobile communication system (5th Generation Mobile Networks Or 5th Generation Wireless Systems, 5G), which is also referred to as a new radio (New Radio, NR) system, or communication systems after 5G such as a 6G system and a device-to-device (Device To Device, D2D) communication system.

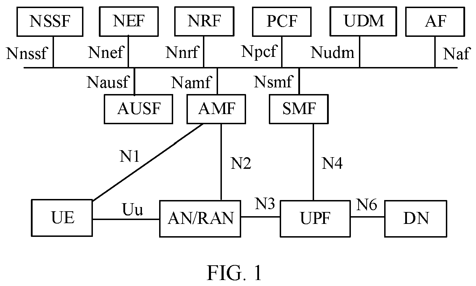

For ease of understanding a communication network architecture of the communication system, the following describes, with reference to FIG. 1, the communication network architecture of the communication system to which embodiments of this application are applicable.

FIG. 1 shows interaction relationships and corresponding interfaces between network functions and entities by using a network service architecture of the 5G system as an example. A service-based architecture (Service-Based Architecture, SBA) of the 3rd Generation Partnership Project (3rd Generation Partnership Project, 3GPP) of the 5G system mainly includes the following network functions and entities: user equipment (User Equipment, UE), an access network (Access Network, AN) or a radio access network (Radio Access Network, RAN), a user plane function (User Plane Function, UPF), a data network (Data Network, DN), an access and mobility management function (Access Management Function, AMF), a session management function SMF, an authentication server function (Authentication Server Function, AUSF), a policy control function (Policy Control Function, PCF), an application function (Application Function, AF), a network slice selection function (Network Slice Selection Function, NSSF), unified data management (Unified Data Management, UDM), a network exposure function (Network Exposure Function, NEF), and a network storage function (Network Repository Function, NRF).

The UE, the AN/RAN, the UPF, and the DN are generally referred to as user plane network functions and entities (or user plane network elements), and the other parts are generally referred to as control plane network functions and entities (or control plane network elements). Processing functions of the control plane network elements in one network are defined in the 3GPP. The control plane network elements have functional behaviors defined in the 3GPP and interfaces defined in the 3GPP. A network function can be used as one network element running on dedicated hardware, a software instance running on dedicated hardware, or a virtual function instantiated on an appropriate platform, for example, implemented on a cloud infrastructure.

The following describes main functions of the network elements in detail.

AN/RAN: The AN/RAN may be various forms of base stations, for example, a macro base station, a micro base station (also referred to as a "small station"), and a distributed unit-control unit (Distribute Unit-Control Unit, DU-CU). Alternatively, the base station may be a radio controller in a cloud radio access network (Cloud Radio Access Network, CRAN) scenario, a relay node, an access point, a vehicle-mounted device, a wearable device, a network device in a future evolved public land mobile network (Public Land Mobile Network, PLMN), or the like. The AN/RAN may be alternatively a broadband network gateway (Broadband Network Gateway, BNG), an aggregation switch, a non-3GPP access device, or the like. The AN/RAN is mainly responsible for functions such as radio resource management on air interface sides, uplink and downlink data classification, quality of service (Quality Of Service, QoS) management, data compression and encryption, completion of signaling processing with a control plane network element, or completion of data forwarding with a user plane function network element. A specific form and structure of the AN/RAN are not limited in embodiments of this application. For example, in systems using different radio access technologies, a device with functions of a base station may have different names. For example, the base station may be an evolved universal terrestrial radio access network (Evolved Universal Terrestrial Radio Access Network, E-UTRAN) device in LTE like an evolved NodeB (evolutional NodeB, eNB or e-NodeB), or may be a next generation radio access network (Next Generation Radio Access Network, NG-RAN) device (for example, a gNB) in the 5G system.

The UPF is mainly responsible for packet routing and forwarding, QoS handling for user plane data, charging information statistics, and the like. Transmission resources and a scheduling function in the UPF that are used to provide a service for the UE are managed and controlled by the SMF.

DN: The DN is a network used for transmitting data. For example, the DN may be an operator service network, an internet access network, or a third-party service network.

The AMF is mainly responsible for handling of control plane messages, for example, access control, mobility management, lawful interception, and access authentication/authorization. Specifically, the AMF mainly includes the following functionalities: (1) handling of an access network control plane; (2) handling of NAS messages and responsible for NAS ciphering and integrity protection; (3) registration management; (4) connection management; (5) accessibility management; (6) mobility management; (7) lawful information interception; (8) providing session management messages between the UE and the SMF; (9) transparently routing session management (SM) messages, like a transparent proxy; (10) access authentication; (11) access authorization; (12) providing transport for SMS messages (short message service messages) between the UE and a short message service function SMSF; (13) interacting with the AUSF and the UE to obtain an authentication intermediate key of the UE; and (14) computing a specific key of the access network.

The SMF is mainly configured for session management, internet protocol (Internet Protocol, IP) address assignment and management of the UE, selection of a manageable user plane function, termination of policy control and charging function interfaces, downlink data notification, and the like.

The PCF is mainly configured for providing parameters related to a UE policy rule, an AM policy rule, and an SM policy rule respectively for the UE, the AMF, and the SMF, managing user subscription information, interworking with the UDM to access subscriber information related to policy decisions, and the like.

The NRF is mainly configured for providing internal/external addressing functions, receiving query requests from other network elements for specific types of network elements and returning information about related network elements, and the like.

The AUSF is mainly responsible for network security, generating a key, implementing mutual authentication for the UE, and supporting a unified authentication framework.

The AF is configured for providing services, and is mainly configured for: (1) application impact on traffic routing; (2) accessing network exposure function; and (3) interacting with a policy framework for policy control.

The NSSF is mainly configured for selection and management of a network slice instance (Network Slice Instance, NSI), determining mapping between allowed network slice information and used network slice information, and determining mapping between configured network slice information and subscribed network slice information.

The NEF is an interface network element inside a network for two-way information exchange with external entities, is also a logical unit for distribution aggregation of internal information, and mainly includes three capabilities: a monitoring capability, a provisioning capability, and a policy/charging capability.

The UDM includes two parts: an application front-end (FE) and a user data repository (UDR).

Data to be transmitted may be transmitted over a PDU session established between the UE and the DN (namely, a communication bearer described in this specification) and transmitted via two network function entities: the (R)AN and the UPF. The UE and the (R)AN communicate with each other by using a specific air interface technology, N1 is an interface between the UE and the AMF, N2 is an interface between the (R)AN and the AMF, N3 is an interface between the (R)AN and the UPF, N4 is an interface between the SMF and the UPF, and N6 is an interface between the UPF and the DN. Namf is a service-based interface exhibited by the AMF, Nsmf is a service-based interface exhibited by the SMF, Nausf is a service-based interface exhibited by the AUSF, Nnssf is a service-based interface exhibited by the NSSF, Nnef is a service-based interface exhibited by the NEF, Nnrf is a service-based interface exhibited by the NRF, Npcf is a service-based interface exhibited by the PCF, Nudm is a service-based interface exhibited by the UDM, and Naf is a service-based interface exhibited by the AF.

For descriptions of functions and the like of network elements such as the UPF, the DN, the AUSF, the NSSF, the NEF, the NRF, and the UDM, refer to interpretations and descriptions in the conventional technology. Details are not described herein.

In addition, it should be noted that terms "system" and "network" used in embodiments of this application are interchangeable.

Moreover, in embodiments of this application, the UE may be a desktop device, a laptop device, a handheld device, a wearable device, a smart household device, a computing device, or the like with a wireless connection function, for example, a netbook, a tablet computer, or an AR/VR device. These are not enumerated herein.

Furthermore, a specific form and structure of the UE are not limited in embodiments of this application.

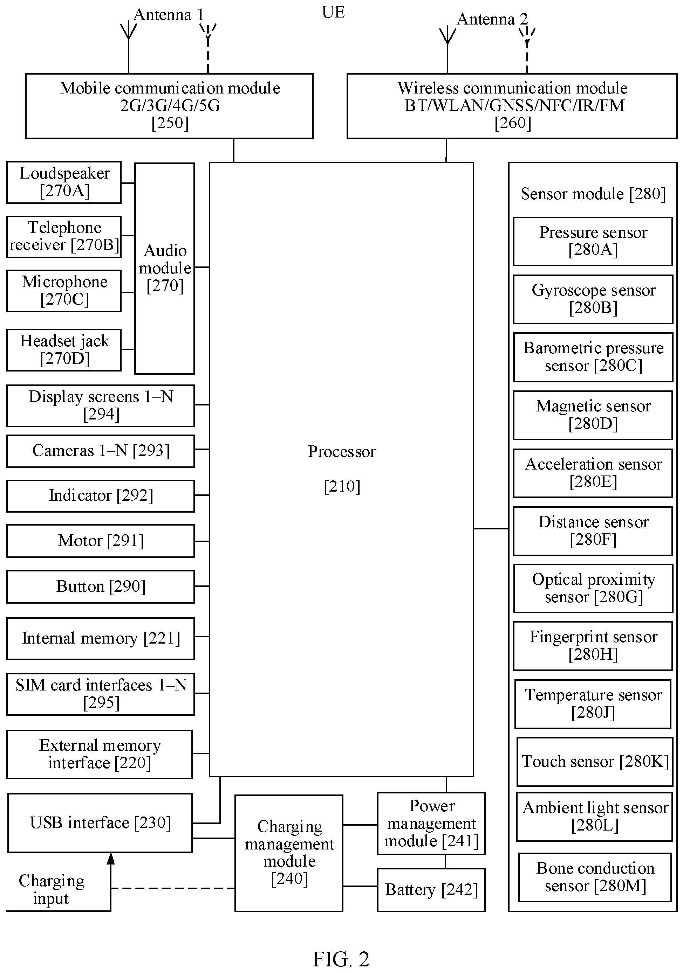

For ease of understanding the UE in the technical solutions provided in embodiments of this application, the following describes a hardware structure of UE with reference to FIG. 2.

For example, in some embodiments, the structure of the UE may be shown in FIG. 2 and includes: a processor 210, an external memory interface 220, an internal memory 221, a universal serial bus (universal serial bus, USB) interface 230, a charging management module 240, a power management module 241, a battery 242, an antenna 1, an antenna 2, a mobile communication module 250, a wireless communication module 260, an audio module 270, a loudspeaker 270A, a telephone receiver 270B, a microphone 270C, a headset jack 270D, a sensor module 280, a button 290, a motor 291, an indicator 292, a camera 293, a display screen 294, a subscriber identity module (subscriber identification module, SIM) card interface 295, and the like. The sensor module 280 may include a pressure sensor 280A, a gyroscope sensor 280B, a barometric pressure sensor 280C, a magnetic sensor 280D, an acceleration sensor 280E, a distance sensor 280F, an optical proximity sensor 280G, a fingerprint sensor 280H, a temperature sensor 280J, a touch sensor 280K, an ambient light sensor 280L, a bone conduction sensor 280M, and the like.

It can be understood that the structure illustrated in this embodiment does not constitute any specific limitation on the UE. In some other embodiments, the UE may include more or fewer components than those shown in the figure, a combination of some components, splitting of some components, or a different arrangement of the components. The components shown in the figure may be implemented by using hardware, software, or a combination of software and hardware.

The processor 210 may include one or more processing units. For example, the processor 210 may include an application processor (application processor, AP), a modem, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The charging management module 240 is configured to receive a charging input from a charger. The charger may be a wireless charger or a wired charger.

The power management module 241 is configured to connect to the battery 242, the charging management module 240, and the processor 210. The power management module 241 receives an input from the battery 242 and/or an input from the charging management module 240, to supply power to the processor 210, the internal memory 221, the display screen 294, the camera 293, the wireless communication module 260, and the like.

A wireless communication function of the UE may be implemented by using the antenna 1, the antenna 2, the mobile communication module 250, the wireless communication module 260, the modem, the baseband processor, and the like.

The antenna 1 and the antenna 2 are configured to transmit and receive electromagnetic wave signals. Each antenna in the UE may be configured to cover one or more communication frequency bands. Different antennas may be further multiplexed to improve antenna utilization.

The mobile communication module 250 may provide wireless communication solutions, including 2G, 3G, 4G, 5G, and the like, applied to the UE.

The wireless communication module 260 may provide wireless communication solutions applied to the UE, including a wireless local area network (wireless local area networks, WLAN) (for example, wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), an infrared (infrared, IR) technology, and the like. The wireless communication module 260 may be one or more components integrated with at least one communication processing module. The wireless communication module 260 receives an electromagnetic wave through the antenna 2, performs frequency modulation and filtering processing on an electromagnetic wave signal, and sends a processed signal to the processor 210. The wireless communication module 260 may further receive a to-be-sent signal from the processor 210, perform frequency modulation and amplification on the signal, convert a processed signal into an electromagnetic wave by using the antenna 2, and radiate the electromagnetic wave through the antenna 2.

In this embodiment of this application, the wireless communication module 260 may be used by the UE to send a data frame of a current service to a network node, and receive a data frame sent by a network node.

The UE implements a display function by using the GPU, the display screen 294, the application processor, and the like. The GPU is a microprocessor for image processing, and is connected to the display screen 294 and the application processor.

The display screen 294 is configured to display an image, a video, and the like. A series of graphical user interfaces (graphical user interfaces, GUIs) may be displayed on the display screen 294 of the UE.

The UE may implement a photographing function by using the ISP, the camera 293, the video codec, the GPU, the display screen 294, the application processor, and the like.

The camera 293 is configured to capture a still image or a video.

The external memory interface 220 may be configured to connect to an external memory card, for example, a micro SD card, to expand a storage capability of the UE.

The internal memory 221 may be configured to store computer executable program code, where the executable program code includes instructions. The processor 210 runs the instructions stored in the internal memory 221, to implement various function applications and data processing of the UE.

The UE may implement an audio function, for example, music playing and recording, by using the audio module 270, the loudspeaker 270A, the telephone receiver 270B, the microphone 270C, the headset jack 270D, the application processor, and the like. The UE may further include the pressure sensor 280A, the barometric pressure sensor 280C, the gyroscope sensor 280B, the magnetic sensor 280D, the acceleration sensor 280E, the distance sensor 280F, the optical proximity sensor 280G, the ambient light sensor 280L, the fingerprint sensor 280H, the temperature sensor 280J, the touch sensor 280K, the bone conduction sensor 280M, the button 290, the motor 291, the indicator 292, and the like.

The SIM card interface 295 is configured to connect to a SIM card. The SIM card may be inserted into the SIM card interface 295 or removed from the SIM card interface 295, to come into contact with or be separated from the UE. The UE can support one or N SIM card interfaces, where N is a positive integer greater than 1. The SIM card interface 295 can support a nano-SIM card, a micro-SIM card, a SIM card, and the like. A plurality of cards may be inserted into a same SIM card interface 295 at the same time. The SIM card interface 295 may also be compatible with an external memory card. The UE interacts with a network by using a SIM card, to implement a call function, a data communication function, and the like.

In addition, an operating system, for example, a Harmony operating system, an iOS operating system, an Android operating system, or a Windows operating system, runs on the foregoing components. An application program may be installed and run on the operating system. In some other embodiments, there may be a plurality of operating systems running within the UE.

It should be understood that the hardware modules included in the UE shown in FIG. 2 are merely used as an example for description, and do not constitute any limitation on the specific structure of the UE. In fact, the UE provided in this embodiment of this application may further include other hardware modules that have interaction relationships with the hardware modules shown in the figure, and the other hardware modules are not specifically limited herein. For example, the UE may further include a flash lamp, a miniature projection apparatus, and the like. For another example, if the UE is a PC, the UE may further include a keyboard, a mouse, and other components.

In addition, it should be noted that, based on a periodic characteristic of SPS, the technical solutions provided in embodiments of this application are applicable to services with periodicity in the foregoing system, such as an XR service.

It should be understood that, descriptions of service scenarios in all the embodiments of this application are all used to help understand the technical solutions provided in this application, and are not used as limitations on service scenarios to which the technical solutions provided in this application are applicable.

Furthermore, it can be understood that by XR means all real and virtual combined environments generated by computer technologies and wearable devices, and human-machine interactions. Representative forms of the XR include augmented reality (Augmented Reality, AR), mixed reality (Mixed Reality, MR), virtual reality (Virtual Reality, VR), and cross-scenarios between them.

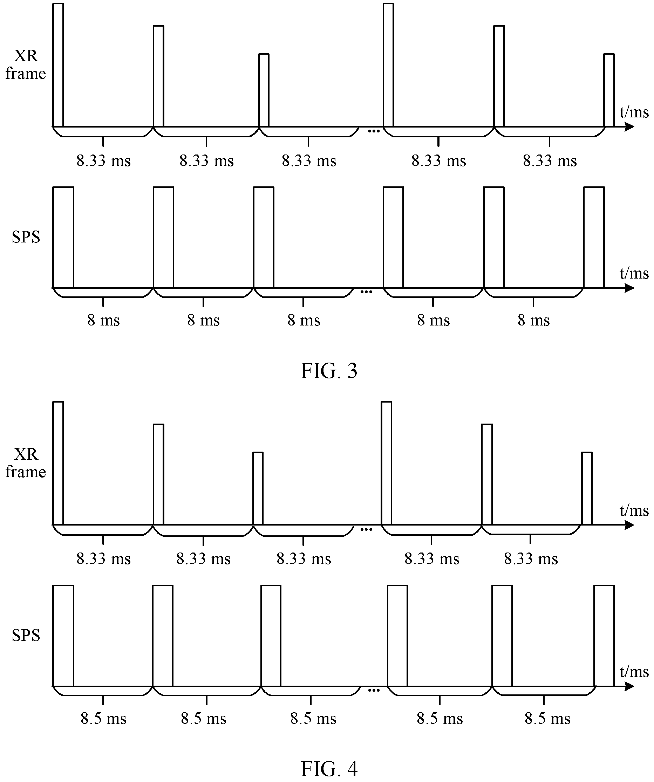

For better understanding of the technical solutions provided in embodiments of this application, the following specifically describes, with reference to FIG. 3 and FIG. 4, a problem that an SPS periodicity does not match a periodicity of an XR service.

A VR service scenario in the XR service is used as an example. Service frame rates available for a user to select in an application layer of UE include but are not limited to 30 fps, 60 fps, 120 fps listed in Table 1, and may also include 240 fps, 480 fps, and the like. These are not enumerated herein, and are not limited in this application.

**Table 1 Table of a correspondence between a service frame rate and a service periodicity**

| | | | |
|---|---|---|---|
| Service frame rate (fps) | 30 | 60 | 120 |
| Service periodicity (ms) | 33.33 | 16.67 | 8.33 |

For example, it can be learned from Table 1 that for a service frame rate of 30 fps, a corresponding service periodicity is 33.33 ms. To be specific, for every 33.33 ms, one frame of data needs to be sent from a base station to UE or from the UE to the base station by using SPS resources.

Correspondingly, for a service frame rate of 60 fps, a corresponding service periodicity is 16.67 ms. To be specific, for every 16.67 ms, one frame of data needs to be sent from the base station to the UE or from the UE to the base station by using SPS resources.

Correspondingly, for a service frame rate of 120 fps, a corresponding service periodicity is 8.33 ms. To be specific, for every 8.33 ms, one frame of data needs to be sent from the base station to the UE or from the UE to the base station by using SPS resources.

In other words, a receiving or sending periodicity of data depends on a selected service frame rate.

According to existing communication standards, both a periodicity of uplink SPS and a periodicity of downlink SPS are configured by a base station by using radio resource control (Radio Resource Control, RRC) signaling. In addition, according to the existing communication standards, both the periodicity of the uplink SPS and the periodicity of the downlink SPS are related to a SCS, and SPS periodicity granularities are different for different SCSs.

For ease of understanding, in this embodiment of this application, the periodicity supported by the uplink SPS and the periodicity supported by the downlink SPS are described separately by using SCSs of 15 kHz and 30 kHz.

For example, when an SCS is 15 kHz, a periodicity granularity of the downlink SPS is 1 ms. In this case, when the SCS is 15 kHz, the periodicity supported by the downlink SPS may be any one of {1 ms, 2 ms, ..., 640 ms}.

In addition, it should be noted that, when the SCS is 15 kHz, the periodicity supported by the uplink SPS is different from the periodicity supported by the downlink SPS.

Specifically, when the SCS is 15 kHz, three periodicity granularities are available for the uplink SPS: 1/7 ms, 0.5 ms, and 1 ms. When the periodicity of the uplink SPS is greater than 1 ms, the periodicity granularity of 1 ms is usually selected.

To be specific, when the SCS is 15 kHz, the periodicity supported by the uplink SPS may be any one of {1/7 ms, 0.5 ms, 1 ms, ..., 640 ms}.

For example, when an SCS is 30 kHz, a periodicity granularity of the downlink SPS is 0.5 ms. In this case, when the SCS is 30 kHz, the periodicity supported by the downlink SPS may be any one of {1/2 ms, 1 ms, 3/2 ms, ..., 640 ms}.

In addition, it should be noted that, when the SCS is 30 kHz, the periodicity supported by the uplink SPS is also different from the periodicity supported by the downlink SPS.

Specifically, when the SCS is 30 kHz, three periodicity granularities are available for the uplink SPS: 1/14 ms, 0.25 ms, and 0.5 ms. When the periodicity of the uplink SPS is greater than 1/2 ms, the periodicity granularity of 0.5 ms is usually selected.

To be specific, when the SCS is 30 kHz, the periodicity supported by the uplink SPS may be any one of {2 symbols (1/14 ms), 7 symbols (0.25 ms), 1/2 ms, 1 ms, 3/2 ms, ..., 640 ms}.

For example, the selected service frame rate is 120 fps, that is, the service periodicity is 8.33 ms. Then, it can be learned from the foregoing periodicity supported by the uplink SPS and the foregoing periodicity supported by the downlink SPS that, when the SCS is 15 kHz, the periodicity of the uplink SPS and the periodicity of the downlink SPS that quite match the service periodicity of 8.33 ms may be, for example, 8 ms or 9 ms.

Correspondingly, when the SCS is 30 kHz, the periodicity of the uplink SPS and the periodicity of the downlink SPS that quite match the service periodicity of 8.33 ms may be, for example, 8 ms or 8.5 ms.

Based on this, in actual application, once periodicities are configured for the uplink SPS and the downlink SPS, subsequent data frames are received and sent based on the configured periodicities by scheduling resources corresponding to the SPS. Because there is a specific time difference between the service periodicity and the periodicity of the uplink SPS, and between the service periodicity and the periodicity of the downlink SPS, they can match each other within a short period of time, but cannot match for a long period of time.

For example, as shown in FIG. 3, if a periodicity configured for SPS (regardless of uplink or downlink) is 8 ms, when an XR frame is transmitted (received/sent) once at a service frame rate of 120 pfs, that is, at an interval of 8.33 ms, a comparison table between a transmission time and a corresponding SPS scheduling time is shown in Table 2.

**Table 2 Comparison table between a transmission time of an XR frame and an SPS scheduling time when the SPS periodicity is 8 ms**

| Transmission time of an XR frame (ms) | SPS scheduling time (ms) | Periodicity configured for the SPS (ms) |
|---|---|---|
| 0 | 0 | |
| 8.33 | 8 | 8 |
| 16.66 | 16 | 8 |
| 24.99 | 24 | 8 |
| 33.32 | 32 | 8 |
| 41.65 | 40 | 8 |
| 49.98 | 48 | 8 |
| 58.31 | 56 | 8 |
| 66.64 | 64 | 8 |
| 74.97 | 72 | 8 |
| 83.3 | 80 | 8 |
| 91.68 | 88 | 8 |
| 99.96 | 96 | 8 |
| 108.29 | 104 | 8 |
| 116.62 | 112 | 8 |
| 124.95 | 120 | 8 |
| 133.28 | 128 | 8 |
| 141.61 | 136 | 8 |
| 149.94 | 144 | 8 |
| 158.27 | 152 | 8 |
| 166.6 | 160 | 8 |
| 174.93 | 168 | 8 |
| 183.26 | 176 | 8 |
| 191.59 | 184 | 8 |
| 199.92 | 192 | 8 |

For example, as shown in FIG. 4, if a periodicity configured for SPS (regardless of uplink or downlink) is 8.5 ms, when an XR frame is transmitted (received/sent) once at a service frame rate of 120 pfs, that is, at an interval of 8.33 ms, a comparison table between a transmission time and a corresponding SPS scheduling time is shown in Table 3.

**Table 3 Comparison table between a transmission time of an XR frame and an SPS scheduling time when the SPS periodicity is 8.5 ms**

| Transmission time of an XR frame (ms) | SPS scheduling time (ms) | Periodicity configured for the SPS (ms) |
|---|---|---|
| 0 | 0 | |
| 8.33 | 8.5 | 8.5 |
| 16.66 | 17 | 8.5 |
| 24.99 | 21.5 | 8.5 |
| 33.32 | 34 | 8.5 |
| 41.65 | 42.5 | 8.5 |
| 49.98 | 51 | 8.5 |
| 58.31 | 59.5 | 8.5 |
| 66.64 | 68 | 8.5 |
| 74.97 | 76.5 | 8.5 |
| 83.3 | 85 | 8.5 |
| 91.68 | 93.5 | 8.5 |
| 99.96 | 102 | 8.5 |
| 108.29 | 110.5 | 8.5 |
| 116.62 | 119 | 8.5 |
| 124.95 | 127.5 | 8.5 |
| 133.28 | 136 | 8.5 |
| 141.61 | 144.5 | 8.5 |
| 149.94 | 153 | 8.5 |
| 158.27 | 161.5 | 8.5 |
| 166.6 | 170 | 8.5 |
| 174.93 | 178.5 | 8.5 |
| 183.26 | 187 | 8.5 |
| 191.59 | 195.5 | 8.5 |
| 199.92 | 204 | 8.5 |

It should be understood that the foregoing descriptions are merely examples provided for better understanding of the technical solutions in this embodiment, and are not construed as the only limitation on this embodiment. Regardless of the SPS periodicity of 8 ms or the SPS periodicity of 8.5 ms, as time goes by, no XR frame can be transmitted when an SPS scheduling periodicity arrives. As a result, power consumption of the UE is increased, and standby duration of the UE is affected.

Moreover, as time goes by, an XR frame needs to be transmitted, but an SPS scheduling periodicity does not arrive. As a result, a delay is increased, and user experience is affected.

In addition, it should be noted that, as communication technologies develop, users have higher requirements on a resolution of a picture. A higher resolution leads to a larger volume of data that needs to be transmitted per frame and also leads to more occupied resources. Consequently, a system capacity (a quantity of supported UE) of one base station becomes smaller. In an existing case in which resources are wasted because an SPS periodicity does not match a periodicity of an XR service, power consumption of the UE is increased, user experience is affected, and the system capacity of the base station is decreased.

Based on this, to resolve the foregoing problems caused because an SPS periodicity does not match a periodicity of a service with a periodic characteristic, an embodiment of this application provides a semi-persistent scheduling method. In the method, a dual-periodicity or multi-periodicity is configured for SPS, so that pre-allocated radio resources can be cyclically scheduled in the SPS based on the configured dual-periodicity or multi-periodicity, and the semi-persistent scheduling periodicity matches a periodicity of a service with a periodic characteristic. This reduces power consumption of user equipment and a delay in a service processing process and improves user experience, and can effectively avoid decrease in a system capacity of a base station by making the SPS scheduling periodicity match the periodicity of the service.

Before the technical solutions of embodiments of this application are described, uplink SPS and downlink SPS manners in the existing semi-persistent scheduling are first described.

For example, for the downlink SPS, a network side like the base station (gNB) first configures a data transmission periodicity for the UE by using RRC signaling, activates the downlink SPS through a physical downlink control channel (Physical Downlink Control Channel, PDCCH) scrambled by a configured scheduling-radio network temporary identifier (Configured Scheduling-Radio Network Temporary Identifier, CS-RNTI), and specifies radio resources for the downlink SPS (referred to as downlink SPS resources for short below). Then, in each periodicity, the UE may use the downlink SPS resources to receive a physical downlink shared channel (Physical Downlink Shared Channel, PDSCH), without a need for the gNB to re-send the PDCCH to specify the allocated downlink SPS resources.

It should be understood that the CS-RNTI is used for SPS scheduling, and is carried to the UE by using RRC signaling. Specifically, after the UE receives the PDCCH sent by the gNB, if the PDCCH is scrambled by the CS-RNTI, it indicates that a service adapted to the SPS currently needs to be used.

Next, when it is determined that the service adapted to the SPS currently needs to be used, start/activation or release of the SPS may be determined by decoding the PDCCH.

For example, based on a decoding result, if it is determined that the SPS is activated, in this case, the UE decodes downlink control information (Downlink Control Information, DCI) that is in the PDCCH and that is corresponding to a 1^{st} downlink data frame, and determines specific time-frequency resource information (referred to as downlink resource information below for ease of differentiation) of the PDSCH through which the gNB sends service data. Then, the UE decodes the PDSCH based on the obtained downlink resource information to obtain the service data sent by the gNB.

Correspondingly, after activation of the downlink SPS, for subsequent downlink data frames, the gNB allocates downlink SPS resources for service data sent by the gNB, without occupying the PDCCH to send DCI, and the UE decodes the PDSCH by using same downlink resource information (the downlink resource information during activation of the SPS) and based on an SPS periodicity configured in RRC signaling, to obtain the subsequent downlink data frames.

It should be noted that "the same downlink resource information" in this embodiment means that the downlink resource information is corresponding to a same frequency domain resource size and a same time domain resource size, and does not necessarily mean that start locations are the same.

In addition, it can be understood that if the PDCCH is scrambled by a cell radio network temporary identifier (Cell-Radio Network Temporary Identifier, C-RNTI) in actual application, it indicates that the current scheduling is normal scheduling, namely, dynamic scheduling, and is not SPS scheduling.

For example, there are two manners for the uplink SPS, and a main difference of the two manners is that activation manners are different.

A manner 1 is referred to as a type 1 (Configured grant type 1, CG type1) below. In this manner, all parameters are configured by using RRC signaling and uplink transmission is activated. The UE can send a PUSCH on configured periodic uplink resources provided that an RRC configuration succeeds without activation by using DCI.

A manner 2 is referred to as a type 2 (Configured grant type 2, CG type2) below. In this manner, the network side first configures a data transmission periodicity for the UE by using RRC signaling, activates the uplink SPS through the PDCCH scrambled by the CS-RNTI, and specifies radio resources for the uplink SPS (referred to as uplink SPS resources for short below). Then, in each periodicity, the UE may use the uplink SPS resources to send a PUSCH.

Specifically, for the type 2, the gNB first sends DCI through the PDCCH scrambled by the CS-RNTI. Correspondingly, the UE decodes the DCI in the PDCCH, and determines specific time-frequency resource information (referred to as uplink resource information below for ease of differentiation) of the PUSCH that is specified by the gNB for the UE to send service data. Then, when the UE needs to send service data, the UE sends the service data to the gNB through the PUSCH based on the obtained uplink resource information.

Correspondingly, after activation of the uplink SPS, for subsequent uplink data frames, the gNB allocates uplink SPS resources for service data sent by the UE, without occupying the PDCCH to send DCI, and the UE sends, to the gNB through the PUSCH by using same uplink resource information (the uplink resource information during activation of the SPS) and based on an SPS periodicity configured in RRC signaling, the uplink data frames that need to be subsequently sent.

It should be noted that "the same uplink resource information" in this embodiment means that the uplink resource information is corresponding to a same frequency domain resource size and a same time domain resource size, and does not necessarily mean that start locations are the same.

It can be learned from the foregoing descriptions that SPS activation may be classified into activation by using DCI and activation by using RRC signaling. This application separately proposes technical solutions for these two activation manners.

A solution 1 is targeted for scenarios in which both the downlink SPS and the uplink SPS (the uplink CG type2) are activated by using DCI.

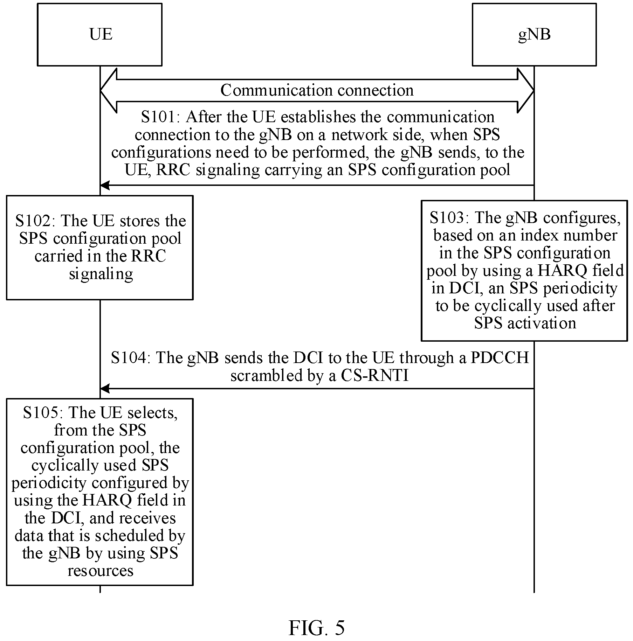

For example, as shown in FIG. 5, an implementation of the solution 1 may include the following steps.

S101: After UE establishes a communication connection to a gNB on a network side, when SPS configurations need to be performed, the gNB sends, to the UE, RRC signaling carrying an SPS configuration pool.

That a service adapted to the SPS is an XR service is used as an example. In this case, the gNB may configure related parameters for the SPS based on an SCS and a service frame rate of the current XR service.

To be specific, in actual application, the SPS configuration pool may include a plurality of groups of SPS configuration parameters for different service frame rates, and each group of SPS configuration parameters may be used to set a plurality of selectable periodicities based on the SCS.

It can be understood that the technical solutions provided in this embodiment mainly focus on periodicities, and therefore the following examples are described mainly in terms of periodicities.

For example, in a service scenario in which a service frame rate is 120 fps and a SCS is 30 kHz, the SPS configurations in the SPS configuration pool may be as follows:
Sps-config{index0, periodicity of 8.5 ms, ...};
Sps-config{index1, periodicity of 8.5 ms, ...}; and
Sps-config{index2, periodicity of 8 ms, ... }.

For another example, in a service scenario in which a service frame rate is 120 fps and a SCS is 15 kHz, the SPS configurations in the SPS configuration pool may be as follows:
Sps-config{index0, periodicity of 8 ms, ...};
Sps-config{index1, periodicity of 8 ms, ...}; and
Sps-config{index2, periodicity of 9 ms, ...}.

For still another example, in a service scenario in which a service frame rate is 60 fps and a SCS is 30 kHz, the SPS configurations in the SPS configuration pool may be as follows:
Sps-config{index0, periodicity of 16.5 ms, ...};
Sps-config{index1, periodicity of 16.5 ms, ...}; and
Sps-config{index2, periodicity of 17 ms, ... }.

For yet another example, in a service scenario in which a service frame rate is 60 fps and a SCS is 15 kHz, the SPS configurations in the SPS configuration pool may be as follows:
Sps-config{index0, periodicity of 16 ms, ...}; and
Sps-config{index1, period 17 ms,...}.

It should be understood that the foregoing descriptions are merely examples provided for better understanding of the technical solutions in this embodiment, and are not construed as the only limitation on this embodiment.

In addition, configuration information omitted in the foregoing examples, that is, content indicated by "...", may be frequency domain resource information, time domain resource information, a modulation and coding scheme, or the like used during semi-persistent scheduling. These are not enumerated herein, and are not limited in this embodiment.

S102: The UE stores the SPS configuration pool carried in the RRC signaling.

S103: The gNB configures, based on an index number in the SPS configuration pool by using a HARQ field in DCI, an SPS periodicity to be cyclically used after SPS activation.

It should be noted that there are many fields in the DCI, such as a frequency domain resource assignment (Frequency domain resource assignment, FDRA) for configuring frequency domain resource information, a time domain resource assignment (Time domain resource assignment, TDRA) for configuring time domain resource information, a modulation and coding scheme (Modulation and coding scheme, MCS) field for configuring a modulation and coding scheme, and a HARQ field for configuring a retransmission process. These are not enumerated herein.

When the DCI is used to activate the uplink CG type2 and the downlink SPS configuration, according to the existing communication standards, the HARQ field is not used, which can be learned from Table 4.

**Table 4 Existing HARQ field setting when the uplink CG type2 and the downlink SPS are activated by using DCI**

| | DCI format 0_0/0_1/0_2; DCI format 1_0/1_2; and DCI format 1_1 |
|---|---|
| HARQ process number 4 bits | set to all "0"s |

To be specific, when the DCI is used to activate the uplink CG type2 and the downlink SPS configuration, according to the existing communication standards, each of the four bits in the HARQ field is set to "0".

Based on this, in the technical solutions provided in this embodiment, a cyclically used SPS configuration (which is specifically an SPS scheduling periodicity in this embodiment) is configured by using the four bits in the HARQ field.

For example, it is agreed that every two bits are corresponding to one SPS configuration, that is, corresponding to an SPS configuration with one index in the SPS configuration pool. Then, two cyclically used periodicities can be configured by using the HARQ field. Based on this, setting information of a modified HARQ field is added to a corresponding communication standard, and a periodicity available for cyclic use can be selected during subsequent SPS activation based on the modified HARQ field and the SPS configuration pool.

The setting information corresponding to the modified HARQ field may be listed, for example, in Table 5:

**Table 5 HARQ field setting in this embodiment when the uplink CG type2 and the downlink SPS are activated by using DCI**

| | DCI format 0_0/0_1/0 2; DCI format 1_0/1_2; and DCI format 1_1 |
|---|---|
| HARQ process number 4 bits | set to (sps-configindexA:2bits, sps-configindexB:2bits) |

As described in Table 5, "HARQ process number 4 bits" indicates a process number of a hybrid automatic repeat request, and the corresponding "4" indicates that four bits are occupied; and "set to (sps-configindexA:2bits, sps-configindexB:2bits)" means that for the four bits in the HARQ field, values of first two bits are set to correspond to an index number sps-configindexA and values of last two bits are set to correspond to an index number sps-configindexB, and SPS-configindexA and SPS-configindexB are any two index numbers in the SPS configuration pool sent by the gNB to the UE.

In addition, it should be noted that, according to provisions of the existing communication standards, a type identifying uplink data is different from a type identifying downlink data in the DCI, where uplink is indicated by "0_", such as "0_0", "0_1", and "0_2" in the foregoing table, and downlink is indicated by "1_", such as "1_0", "1_1", and " 1_2" in the foregoing table.

For example, in some implementations, periodicities of both the uplink CG type2 and the downlink SPS may be set to dual-periodicities, as listed in Table 5, that is, every two bits are corresponding to an index number of one piece of SPS configuration information.

For example, in some other implementations, a dual-periodicity may be used for the uplink CG type2, and an invariable single-periodicity may be used for the downlink SPS.

It should be understood that the foregoing descriptions are merely examples provided for better understanding of the technical solutions in this embodiment, and are not construed as the only limitation on this embodiment.

In addition, it should be noted that in actual application, an SPS dual-periodicity or multi-periodicity configuration is implemented by reusing the HARQ field or in another manner. A person skilled in the art may implement the SPS dual-periodicity or multi-periodicity configuration by reusing another field in the DCI based on a service requirement.

S104: The gNB sends the DCI to the UE through a PDCCH scrambled by a CS-RNTI.

S105: The UE selects, from the SPS configuration pool, the cyclically used SPS periodicity configured by using the HARQ field in the DCI, and receives data that is scheduled by the gNB by using SPS resources.

Agreed content provided in in Table 5 is used as an example. According to the foregoing agreed content, if the HARQ field in the DCI is "0001", it indicates that subsequent SPS resource scheduling is cyclically performed based on a periodicity corresponding to an index0 (referred to as a configuration 1 below) and a periodicity corresponding to an index1 (referred to as a configuration 2 below) that are suitable for a current service frame rate and frequency in the SPS configuration pool. In other words, the subsequent SPS resource scheduling is cyclically performed based on the following periodicities: a configuration 1, a configuration 2, a configuration 1, a configuration 2, a configuration 1, a configuration 2, and so on.

It should be understood that the foregoing descriptions are merely examples provided for better understanding of the technical solutions in this embodiment, and are not construed as the only limitation on this embodiment.

Therefore, in the technical solutions provided in this embodiment, the gNB preconfigures the SPS configuration pool, and configures dual-periodicities for the uplink CG type2 and the downlink SPS by using the HARQ field in the DCI, so that pre-allocated radio resources can be cyclically scheduled in the uplink CG type2 and the downlink SPS based on the configured dual-periodicities, and the semi-persistent scheduling periodicity matches a periodicity of a service with a periodic characteristic. This reduces power consumption of the user equipment and a delay in a service processing process and improves user experience, and can effectively avoid decrease in a system capacity of the base station by making the SPS scheduling periodicity match the periodicity of the service.

It should be noted that in an actual application scenario, the technical solutions provided in this embodiment are also applicable to a single-periodicity service scenario. Specifically, in a scenario in which single-periodicities need to be configured for the uplink CG type2 and the downlink SPS, content of first two bits may be the same as that of last two bits in the HARQ field.

For example, when the HARQ field is "0000", it indicates that data scheduled by the gNB by using the SPS resources is always received based on the periodicity corresponding to the index0, namely, the configuration 1.

For another example, when the HARQ field is "0101", it indicates that data scheduled by the gNB by using the SPS resources is always received based on the periodicity corresponding to the index1, namely, the configuration 2.

For still another example, when the HARQ field is "1010", it indicates that data scheduled by the gNB by using the SPS resources is always received based on a periodicity corresponding to an index2, namely, a configuration 3.

For yet another example, when the HARQ field is "1111", it indicates that data scheduled by the gNB by using the SPS resources is always received based on a periodicity corresponding to an index3, namely, a configuration 4.

For example, in an actual application scenario, alternatively, "00" may be agreed as an invalid configuration.

Correspondingly, if "00" is agreed as an invalid configuration, the index number corresponding to the configuration 1 listed above needs to be changed to the index1 (corresponding to "01"), the index number corresponding to the configuration 2 needs to be changed to the index2 (corresponding to "10"), and the index number corresponding to the configuration 3 needs to be changed to the index3 (corresponding to "11").

In addition, in the scenario in which "00" is agreed as an invalid configuration, there are only three selectable configurations corresponding to the index1 to the index3.

Moreover, in the scenario in which "00" is agreed as an invalid configuration, if single-periodicity scheduling needs to be performed by using the configuration 1 corresponding to the index1, content of the HAQR field may be "0001"; if single-periodicity scheduling needs to be performed by using the configuration 2 corresponding to the index2, content of the HAQR field may be "0010"; or if single-periodicity scheduling needs to be performed by using the configuration 3 corresponding to the index3, content of the HAQR field may be "0011".

It should be understood that the foregoing descriptions are merely examples provided for better understanding of the technical solutions in this embodiment, and are not construed as the only limitation on this embodiment.

Because the HARQ field has only four bits, only two periodicities available for cyclic use can be selected once, that is, only dual-periodicity manner can be used. To enable the technical solutions provided in this application to be applicable to more service scenarios and to implement multi-periodicity cycling, another implementation is proposed based on the foregoing embodiment.

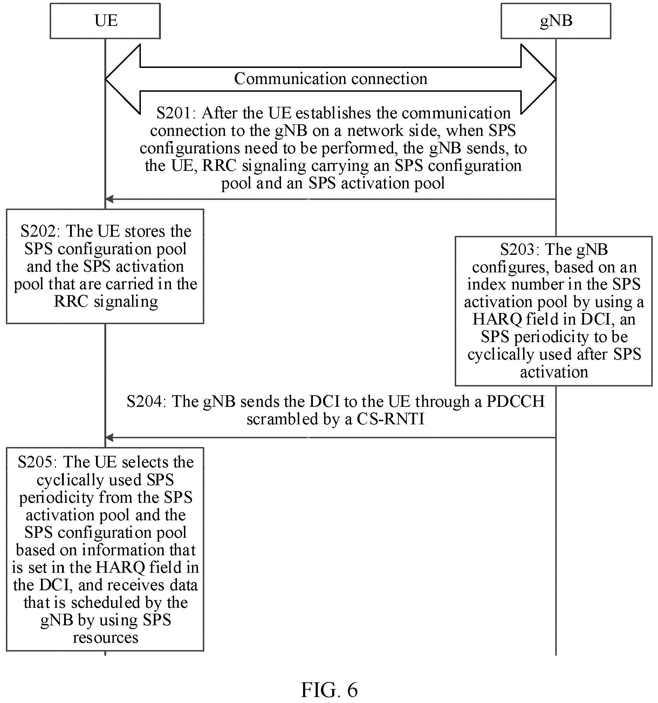

As shown in FIG. 6, this embodiment includes the following steps.

S201: After UE establishes a communication connection to a gNB on a network side, when SPS configurations need to be performed, the gNB sends, to the UE, RRC signaling carrying an SPS configuration pool and an SPS activation pool.

S202: The UE stores the SPS configuration pool and the SPS activation pool that are carried in the RRC signaling.

S203: The gNB configures, based on an index number in the SPS activation pool by using a HARQ field in DCI, an SPS periodicity to be cyclically used after SPS activation.

In this embodiment, that the gNB configures, by using a HARQ field in DCI, an SPS periodicity to be cyclically used after SPS activation is specifically: The gNB configures the index number in the SPS activation pool in the HARQ field instead of configuring an index number in the SPS configuration pool in the HARQ field.

S204: The gNB sends the DCI to the UE through a PDCCH scrambled by a CS-RNTI.

S205: The UE selects the cyclically used SPS periodicity from the SPS activation pool and the SPS configuration pool based on information that is set in the HARQ field in the DCI, and receives data that is scheduled by the gNB by using SPS resources.

This embodiment is different from the foregoing embodiment in that the RRC signaling sent by the gNB to the UE includes the SPS activation pool in addition to the SPS configuration pool configured in the foregoing embodiment. The following mainly describes differences. For same or similar content, refer to the embodiment shown in FIG. 5. Details are not described herein again.

For example, the SPS activation pool described above may include one or more pieces of SPS activation information. Each piece of SPS activation information may include, for example, an index number identifying the SPS activation information and an index number of SPS configuration information that can be cycled and that is corresponding to the index number.

That the SPS activation pool includes a plurality of pieces of SPS activation information is used as an example. In this case, a form of the SPS activation pool may be, for example, sps-ConfigActivationList {0:{0, 1}, 1:{0, 1, 2}, 2:{3, 1}, 3:{3, 2}, ...}.

A parameter before ":" is an index number identifying SPS activation information, and a parameter in " {}" after ":" is an index number corresponding to SPS configuration information that can be cycled and that is corresponding to the index number. In actual application, a plurality of pieces of SPS configuration information that can be cycled may be selected from the SPS configuration pool based on a service requirement. This is not limited in this embodiment.

An example is used in which the SPS configuration pool is "SPS-config{0, periodicity 1}, SPS-config{1, periodicity 2}, SPS-config{2, periodicity 3}, and SPS-config{3, periodicity 4}", and the SPS activation pool is sps-ConfigActivationList {0:{0, 1}, 1:{0, 1, 2}, 2:{3, 1}, 3:{3, 2}, ... }. In this case, "0:{0, 1}" indicates that SPS configuration information that can be cycled and that is corresponding to the index number "0" (an index0) in the SPS activation pool is the periodicity 1 corresponding to the index number "0" in the SPS configuration pool and the periodicity 2 corresponding to the index number "1" in the SPS configuration pool.

Correspondingly, "1:{0, 1, 2}" indicates that SPS configuration information that can be cycled and that is corresponding to the index number "1" (an index1) in the SPS activation pool is the periodicity 1 corresponding to the index number "0" in the SPS configuration pool, the periodicity 2 corresponding to the index number "1" in the SPS configuration pool, and the periodicity 3 corresponding to the index number "2" in the SPS configuration pool.

Correspondingly, "2:{3, 1}" indicates that SPS configuration information that can be cycled and that is corresponding to the index number "2" (an index2) in the SPS activation pool is the periodicity 4 corresponding to the index number "3" in the SPS configuration pool and the periodicity 2 corresponding to the index number "1" in the SPS configuration pool.

Correspondingly, "3:{3, 2}" indicates that SPS configuration information that can be cycled and that is corresponding to the index number "3" (an index3) in the SPS activation pool is the periodicity 4 corresponding to the index number "3" in the SPS configuration pool and the periodicity 3 corresponding to the index number "2" in the SPS configuration pool.

It should be understood that the foregoing descriptions are merely examples provided for better understanding of the technical solutions in this embodiment, and are not construed as the only limitation on this embodiment.

In addition, in the solution in which the SPS activation pool is configured, it may be agreed that four bits in the HARQ field are corresponding to an index number of one piece of SPS activation information in the SPS activation pool. In this case, "0000" to "1111" may be corresponding to index numbers of 16 pieces of SPS activation information, and a plurality of pieces of SPS configuration information that can be cycled and that is corresponding to an index number of each piece of SPS activation information may be configured based on a service requirement. In this way, more configuration manners can be supported, and there are more SPS cycle periodicities, that is, multi-periodicity cycling is implemented.

Based on this, setting information of a modified HARQ field is added to a corresponding communication standard, and a periodicity available for cyclic use can be selected during subsequent SPS activation based on the modified HARQ field, the SPS activation pool, and the SPS configuration pool.

The setting information corresponding to the modified HARQ field may be listed, for example, in Table 6:

**Table 6 HARQ field setting in this embodiment when the uplink CG type2 and the downlink SPS are activated by using DCI**

| | DCI format 0_0/0_1/0 2; DCI format 1_0/1 2; and DCI format 1_1 |
|---|---|
| HARQ process number 4 bits | set to sps-ConfigActivationListindex (index number of SPS activation information in the SPS activation pool) |

Agreed content provided in in Table 6 is used as an example. According to the foregoing agreed content, an example is used in which the SPS configuration pool is "SPS-config{0, periodicity 1}, SPS-config{1, periodicity 2}, SPS-config{2, periodicity 3}, and SPS-config{3, periodicity 4}", and the SPS activation pool is sps-ConfigActivationList {0:{0, 1}, 1:{0, 1, 2}, 2:{3, 1}, 3:{3, 2}, ...}. If content of the HARQ field in the DCI is "0000", it indicates that subsequent SPS resource scheduling is cyclically performed based on periodicities indicated by SPS configuration information {0, 1} corresponding to SPS activation information with an index number "0" in the SPS activation pool. In other words, data that is scheduled by the gNB by using the SPS resources is received based on the following scheduling periodicities: a periodicity 1, a periodicity 2, a periodicity 1, a periodicity 2, and so on.

Correspondingly, if content of the HARQ field in the DCI is "0001", it indicates that subsequent SPS resource scheduling is cyclically performed based on periodicities indicated by SPS configuration information {0, 1, 2} corresponding to SPS activation information with an index number "1" in the SPS activation pool. In other words, data that is scheduled by the gNB by using the SPS resources is received based on the following scheduling periodicities: a periodicity 1, a periodicity 2, a periodicity 3, a periodicity 1, a periodicity 2, a periodicity 3, and so on.

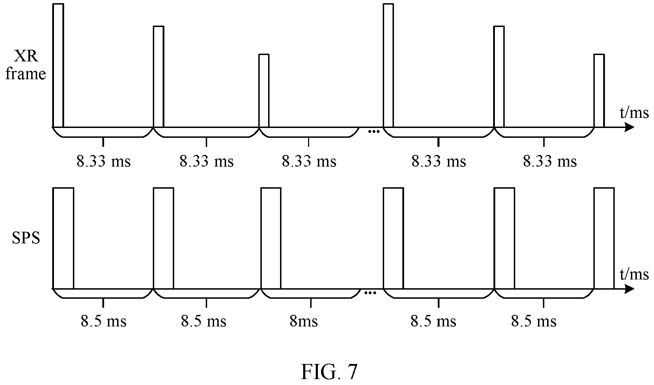

For example, as shown in FIG. 7, if a cycle periodicity configured for SPS (regardless of uplink or downlink) is the cycle periodicity corresponding to the index number "1" in the foregoing SPS activation pool and the cycle periodicity corresponding to the index number "1" is 8.5 ms, 8.5 ms, and 8 ms, when an XR frame is transmitted (received/sent) once at a service frame rate of 120 pfs, that is, at an interval of 8.33 ms, a comparison table between a transmission time and a corresponding SPS scheduling time is shown in Table 7.

**Table 7 Comparison table between a transmission time of an XR frame and an SPS scheduling time when the SPS periodicity is a cycle periodicity being 8.5 ms, 8.5 ms, and 8 ms**

| Transmission time of an XR frame (ms) | SPS scheduling time (ms) | Periodicity configured for the SPS (ms) |
|---|---|---|
| 0 | 0 | |
| 8.33 | 8.5 | 8.5 |
| 16.66 | 17 | 8.5 |
| 24.99 | 25 | 8 |
| 33.32 | 33.5 | 8.5 |
| 41.65 | 42 | 8.5 |
| 49.98 | 50 | 8 |
| 58.31 | 58.5 | 8.5 |
| 66.64 | 67 | 8.5 |
| 74.97 | 75 | 8 |
| 83.3 | 83.5 | 8.5 |
| 91.68 | 92 | 8.5 |
| 99.96 | 100 | 8 |
| 108.29 | 108.5 | 8.5 |
| 116.62 | 117 | 8.5 |
| 124.95 | 125 | 8 |
| 133.28 | 133.5 | 8.5 |
| 141.61 | 142 | 8.5 |
| 149.94 | 150 | 8 |
| 158.27 | 158.5 | 8.5 |
| 166.6 | 167 | 8.5 |
| 174.93 | 175 | 8 |
| 183.26 | 183.5 | 8.5 |
| 191.59 | 192 | 8.5 |
| 199.92 | 200 | 8 |

It should be understood that the foregoing descriptions are merely examples provided for better understanding of the technical solutions in this embodiment, and are not construed as the only limitation on this embodiment.

Therefore, in the technical solutions provided in this embodiment, the gNB preconfigures the SPS configuration pool and the SPS activation pool, and configures multi-periodicities for the uplink CG type2 and the downlink SPS by using the HARQ field in the DCI, so that pre-allocated radio resources can be cyclically scheduled in the uplink CG type2 and the downlink SPS based on the configured multi-periodicities, and the semi-persistent scheduling periodicity matches a periodicity of a service with a periodic characteristic. This reduces power consumption of the user equipment and a delay in a service processing process and improves user experience, and can effectively avoid decrease in a system capacity of the base station by making the SPS scheduling periodicity match the periodicity of the service.

It can be learned from the descriptions of the foregoing two embodiments that for the uplink CG type2 and downlink SPS manners that are activated by using DCI, specifically, dual-periodicities or multi-periodicities are configured for the uplink CG type2 and the downlink SPS based on the HARQ field and the SPS configuration pool or a combination of the HARQ field, the SPS configuration pool, and the SPS activation pool that are used during activation by using DCI, so that pre-allocated radio resources can be cyclically scheduled in the uplink CG type2 and the downlink SPS based on the configured dual-periodicities or multi-periodicities, and the semi-persistent scheduling periodicity matches a periodicity of a service with a periodic characteristic. This reduces the power consumption of the user equipment and the delay in the service processing process and improves user experience, and can effectively avoid decrease in the system capacity of the base station by making the SPS scheduling periodicity match the periodicity of the service.

Likewise, in an actual application scenario, the technical solutions provided in this embodiment are also applicable to a single-periodicity service scenario. A person skilled in the art may perform setting based on a service requirement. This is not limited in this embodiment.

In addition, it should be noted that in actual application, an SPS dual-periodicity or multi-periodicity configuration is implemented by reusing the HARQ field or in another manner. A person skilled in the art may implement the SPS dual-periodicity or multi-periodicity configuration by reusing another field in the DCI based on a service requirement.

A solution 2 is targeted for a scenario in which the uplink CG type1 manner is activated.

It should be noted that the CG type 1 manner is activated directly after related parameters of SPS are configured by using RRC signaling, that is, the DCI sent by the PDCCH scrambled by the CS-RNTI does not exist. Consequently, there is no way to select a cycly periodicity from the SPS configuration pool or the SPS activation pool by using the HARQ field or another agreed field in the DCI. To implement dual-periodicity or multi-periodicity cyclic scheduling in the uplink CG type1 as well, this application provides a cycle periodicity configuration manner applicable to the uplink CG type1.

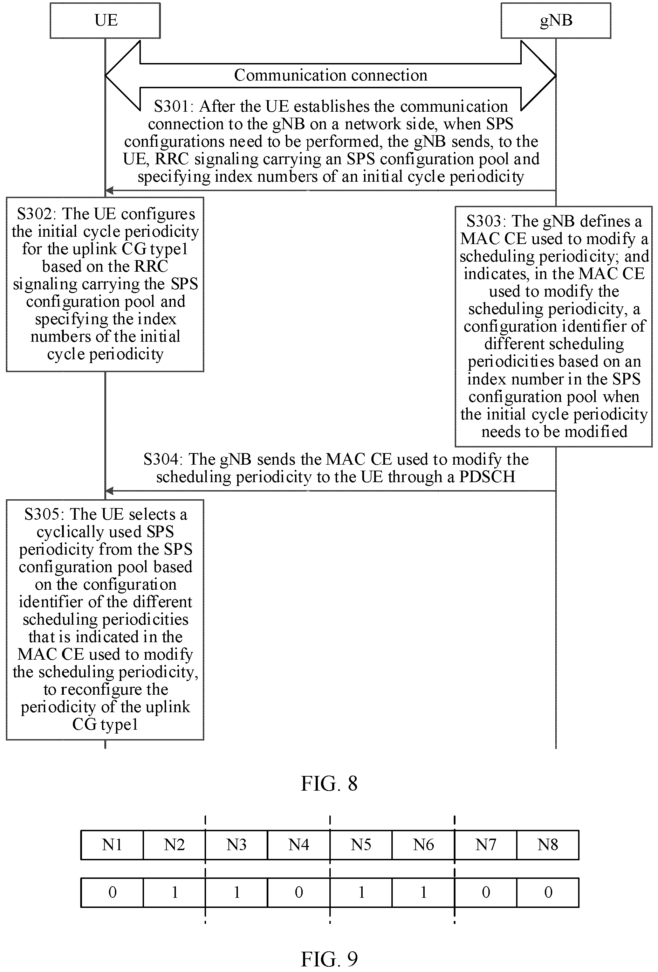

As shown in FIG. 8, this embodiment includes the following steps.

S301: After UE establishes a communication connection to a gNB on a network side, when SPS configurations need to be performed, the gNB sends, to the UE, RRC signaling carrying an SPS configuration pool and specifying index numbers of an initial cycle periodicity.

That a service adapted to the SPS is an XR service is still used as an example. In this case, the gNB may configure related parameters for the SPS based on an SCS and a service frame rate of the current XR service.

To be specific, in actual application, the SPS configuration pool may include a plurality of groups of SPS configuration parameters for different service frame rates, and each group of SPS configuration parameters may be used to set a plurality of selectable periodicities based on the SCS.

It can be understood that the technical solutions provided in this embodiment mainly focus on periodicities, and therefore the following examples are described mainly in terms of periodicities.

To distinguish the SPS configuration pool corresponding to the uplink CG type1 from the SPS configuration pool corresponding to the downlink SPS and uplink CG type2 manners, in this embodiment, uplink SPS configuration information in the SPS configuration pool corresponding to the uplink CG type1 is named as CG-config.

For example, in a service scenario in which a service frame rate is 120 fps and a SCS is 30 kHz, the SPS configurations in the SPS configuration pool may be as follows:
CG-config{index1, periodicity of 8.5 ms, ...};
CG-config{index2, periodicity of 8.5 ms, ...}; and
CG-config{index3, periodicity of 8 ms, ...}.

For example, in a service scenario in which a service frame rate is 120 fps and a SCS is 15 kHz, the SPS configurations in the SPS configuration pool may be as follows:
CG-config{index1, periodicity of 8 ms, ...};
CG-config{index2, periodicity of 8 ms, ...}; and
CG-config{index3, periodicity of 9 ms, ...}.

For example, in a service scenario in which a service frame rate is 60 fps and a SCS is 30 kHz, the SPS configurations in the SPS configuration pool may be as follows:
CG-config{index1, periodicity of 16.5 ms, ...};
CG-config{index2, periodicity of 16.5 ms, ...}; and
CG-config{index3, periodicity of 17 ms, ...}.

For example, in a service scenario in which a service frame rate is 60 fps and a SCS is 15 kHz, the SPS configurations in the SPS configuration pool may be as follows:
CG-config{index1, periodicity of 16 ms, ...}; and
CG-config{index2, periodicity of 17 ms,...}.

It should be understood that the foregoing descriptions are merely examples provided for better understanding of the technical solutions in this embodiment, and are not construed as the only limitation on this embodiment.

In addition, configuration information omitted in the foregoing examples, that is, content indicated by "...", may be frequency domain resource information, time domain resource information, a modulation and coding scheme, or the like used during semi-persistent scheduling. These are not enumerated herein, and are not limited in this embodiment.

In addition, it should be noted that the foregoing index numbers of the initial cycle periodicity specified by the gNB by using the RRC signaling are specifically index numbers corresponding to SPS periodicities in the SPS configuration pool in this embodiment.

It can be understood that in some implementations, the index numbers of the initial cycle periodicity specified by the gNB may be set based on a service requirement. For example, in the service scenario in which the service frame rate is 120 fps and the SCS is 30 kHz, the specified index numbers of the initial cycle periodicity may be the index1 and the index2 in the foregoing examples, may be the index1 and the index3, or may be the index3, the index1, the index2, and the like. These are not enumerated herein, and the index number corresponding to the SPS periodicity and an order of the index number may be specified based on a service requirement in a specific implementation.

In addition, in some other implementations, the index numbers of the initial cycle periodicity specified by the gNB may be invariable, and a scheduling periodicity is modified by using the solutions provided in this embodiment during subsequent SPS resource scheduling.

S302: The UE configures the initial cycle periodicity for the uplink CG type1 based on the RRC signaling carrying the SPS configuration pool and specifying the index numbers of the initial cycle periodicity.

The service scenario in which the service frame rate is 120 fps and the SCS is 30 kHz is used as an example. When the index numbers of the initial cycle periodicity specified by the gNB by using the RRC signaling are index numbers index1 and index3 in the SPS configuration pool (for example, CG-config{index1, periodicity of 8.5 ms, ...}; CG-config{index2, periodicity of 8.5 ms, ...}; and CG-config{index3, periodicity of 8 ms, ...}), the index numbers of the initial cycle periodicity specified by the gNB may be configured by using the parameter CG-ConfigActivation, which may be, for example, RRC signaling: CG-ConfigActivation {index 1, index3}.

For example, after receiving the foregoing RRC signaling CG-ConfigActivation{index1, index3}, the UE selects the SPS periodicity of 8.5 ms from the SPS configuration pool based on the index number index1, selects the SPS periodicity of 8 ms from the SPS configuration pool based on the index number index3, and receives data that is scheduled by the gNB by using SPS resources, in a cycle order that is set when the gNB specifies the index numbers of the initial cycle periodicity and based on the following scheduling periodicities: 8.5 ms, 8 ms, 8.5 ms, 8 ms, and so on. In other words, "8.5 ms and 8 ms" is used as the initial cycle periodicity.

It should be understood that the foregoing descriptions are merely examples provided for better understanding of the technical solutions in this embodiment, and are not construed as the only limitation on this embodiment.

S303: The gNB defines a MAC CE used to modify a scheduling periodicity; and indicates, in the MAC CE used to modify the scheduling periodicity, a configuration identifier of different scheduling periodicities based on an index number in the SPS configuration pool when the initial cycle periodicity needs to be modified.

It can be understood that the MAC CE is a control element of a MAC layer. In actual application, each MAC CE has an LCID (a locale ID) that identifies uniqueness of the MAC CE, and content filled in each MAC CE is used to identify an operation that currently needs to be performed.

For example, currently, it is agreed that content filled in a MAC CE with an LCID "111101" is used to identify that the UE needs to transmit an uplink data frame in a data format "short BSR".

For another example, currently, it is agreed that content filled in a MAC CE with an LCID "111110" is used to identify that the UE needs to transmit an uplink data frame in a data format "long BSR".

Based on this characteristic, in this embodiment, a new MAC CE (for example, eight bits in size) is defined, a new LCID is allocated to this newly defined MAC CE, and it is agreed that the base station modifies a cycle scheduling periodicity of the uplink CG type1 by modifying content filled in this newly defined MAC CE.

For example, as shown in FIG. 9, in this embodiment, every two bits are corresponding to an index number (index) of one piece of SPS configuration information in the SPS configuration pool. For example, it is agreed that "00" indicates an invalid configuration, "01" is corresponding to SPS configuration information whose index number is an index1, "10" is corresponding to SPS configuration information whose index number is an index2, and "11" is corresponding to SPS configuration information whose index number is an index3.

Still refer to FIG. 9. If the gNB needs to modify the initial cycle periodicity to "the SPS configuration information corresponding to the index1 the SPS configuration information corresponding to the index2, and the SPS configuration information corresponding to the index3" to perform cyclic scheduling, the gNB indicates that the configuration identifier of the different scheduling periodicities is "01101100" in the newly agreed MAC CE.

In other words, in this embodiment, the gNB indicates, in the newly agreed MAC CE, that the configuration identifier of the different scheduling periodicities is corresponding to index numbers in the SPS configuration pool.

S304: The gNB transmits the MAC CE used to modify the scheduling periodicity to the UE through a PDSCH.

S305: The UE selects a cyclically used SPS periodicity from the SPS configuration pool based on the configuration identifier of the different scheduling periodicities that is indicated in the MAC CE used to modify the scheduling periodicity, to reconfigure the periodicity of the uplink CG type1.

The service scenario in which the service frame rate is 120 fps and the SCS is 30 kHz is used as an example. Based on the content "01101100" filled in the MAC CE shown in FIG. 9 and the foregoing agreed content, a reconfigured cycle periodicity of the uplink CG type1 is the periodicity corresponding to the index1, the periodicity corresponding to the index2, and the periodicity corresponding to the index3. In other words, the UE receives data that is scheduled by the gNB by using the SPS resources, based on the following scheduling periodicities: 8.5 ms, 8.5 ms, 8 ms, 8.5 ms, 8.5 ms, 8 ms, and so on.

Therefore, in the technical solutions provided in this embodiment, the gNB preconfigures the SPS configuration pool, and agrees, by adding the new LCID, the MAC CE used to modify the cycle periodicity of the uplink CG type1, to enable the UE to dynamically modify the cycle periodicity of the uplink CG type1, so that the semi-persistent scheduling periodicity matches a periodicity of a service with a periodic characteristic. This reduces power consumption of the user equipment and a delay in a service processing process and improves user experience, and can effectively avoid decrease in a system capacity of the base station by making the SPS scheduling periodicity match the periodicity of the service.

Likewise, in an actual application scenario, the technical solutions provided in this embodiment are also applicable to a single-periodicity service scenario. A person skilled in the art may perform setting based on a service requirement. This is not limited in this embodiment.

In addition, because every two bits of the 8-bit MAC CE are corresponding to one index, the MAC CE can be corresponding to only four different index numbers, and in this case, there are a maximum of four pieces of corresponding SPS configuration information. To enable the technical solutions provided in this application to be applicable to more service scenarios, another implementation is proposed based on the foregoing embodiment.

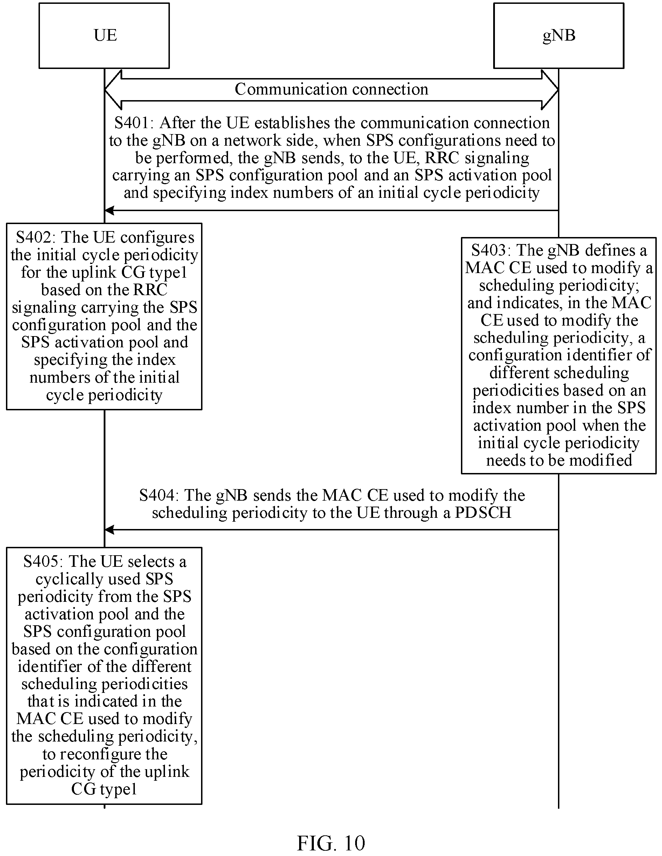

As shown in FIG. 10, this embodiment includes the following steps.

S401: After UE establishes a communication connection to a gNB on a network side, when SPS configurations need to be performed, the gNB sends, to the UE, RRC signaling carrying an SPS configuration pool and an SPS activation pool and specifying index numbers of an initial cycle periodicity.

It should be noted that the foregoing index numbers of the initial cycle periodicity specified by the gNB by using the RRC signaling are specifically index numbers corresponding to SPS periodic queues in the SPS activation pool in this embodiment. For example, in a scenario in which the SPS activation pool is "CG-ConfigActivationList {0:{1, 2}, 1:{1, 2, 3}, 2:{3, 1}, 3:{3, 2}, ...}", the index numbers of the initial cycle periodicity specified by the gNB by using the RRC signaling are index numbers before ":".

It can be understood that in some implementations, the index numbers of the initial cycle periodicity specified by the gNB may be set based on a service requirement. For example, in a service scenario in which a service frame rate is 120 fps and an SCS is 30 kHz, if the UE is configured to receive data that is scheduled by the gNB by using the SPS resources, based on an SPS periodicity corresponding to an index1 and an SPS periodicity corresponding to an index3 in the SPS configuration pool, a specified index number is "0" in the foregoing SPS activation pool.

In addition, in some other implementations, the index numbers of the initial cycle periodicity specified by the gNB may be invariable, and a scheduling periodicity is modified by using the solutions provided in this embodiment during subsequent SPS resource scheduling.

It should be understood that the foregoing descriptions are merely examples provided for better understanding of the technical solutions in this embodiment, and are not construed as the only limitation on this embodiment.

S402: The UE configures the initial cycle periodicity for the uplink CG type1 based on the RRC signaling carrying the SPS configuration pool and the SPS activation pool and specifying the index numbers of the initial cycle periodicity.

Specifically, the initial cycle periodicity that is set by the gNB in this embodiment is corresponding to an index number in the SPS activation pool.

S403: The gNB defines a MAC CE used to modify a scheduling periodicity; and indicates, in the MAC CE used to modify the scheduling periodicity, a configuration identifier of different scheduling periodicities based on the index number in the SPS activation pool when the initial cycle periodicity needs to be modified.

Specifically, in this embodiment, the configuration identifier of the different scheduling periodicities that is indicated in the MAC CE used to modify the scheduling periodicity is specifically the index number in the SPS activation pool rather than an index number in the SPS configuration pool.

S404: The gNB sends the MAC CE used to modify the scheduling periodicity to the UE through a PDSCH.

S405: The UE selects a cyclically used SPS periodicity from the SPS activation pool and the SPS configuration pool based on the configuration identifier of the different scheduling periodicities that is indicated in the MAC CE used to modify the scheduling periodicity, to reconfigure the periodicity of the uplink CG type1.

This embodiment is different from the foregoing embodiment in that the RRC signaling sent by the gNB to the UE includes the SPS activation pool in addition to the SPS configuration pool configured in the foregoing embodiment. The following mainly describes differences. For same or similar content, refer to the embodiment shown in FIG. 8. Details are not described herein again.

For example, the SPS activation pool described above may include one or more pieces of SPS activation information. Each piece of SPS activation information may include, for example, an index number identifying the SPS activation information and an index number of SPS configuration information that can be cycled and that is corresponding to the index number.

To distinguish the SPS activation pool mentioned in the solution 1, in this embodiment, the SPS activation pool corresponding to the uplink CG type1 is named as "CG-ConfigActivationList".

That the SPS activation pool corresponding to the uplink CG type1 includes a plurality of pieces of SPS activation information (referred to as uplink CG type1 activation information below) is used as an example. In this case, a form of the SPS activation pool corresponding to the uplink CG type1 may be, for example, CG-ConfigActivationList {0:{1, 2}, 1:{1, 2, 3}, 2:{3, 1}, 3:{3, 2}, ...}".

A parameter before ":" is an index number identifying uplink CG type1 activation information, and a parameter in "{}" after ":" is an index number corresponding to uplink CG type1 configuration information that can be cycled and that is corresponding to the index number. In actual application, a plurality of pieces of uplink CG type1 configuration information that can be cycled may be selected, based on a service requirement, from the SPS configuration pool corresponding to the uplink CG type1. This is not limited in this embodiment.

An example is used in which the SPS configuration pool corresponding to the uplink CG type1 is "CG-config{0, periodicity 1}, CG-config {1, periodicity 2}, CG-config{2, periodicity 3}, and CG-config{3, periodicity 4}", and the SPS activation pool corresponding to the uplink CG type1 is CG-ConfigActivationList {0:{1, 2}, 1:{1, 2, 3}, 2:{3, 1}, 3:{3, 2}, ...}. In this case, "0:{1, 2}" indicates that uplink CG type1 configuration information that can be cycled and that is corresponding to the index number "0" (an index0) in the SPS activation pool corresponding to the uplink CG type1 is the periodicity 2 corresponding to the index number "1" in the SPS configuration pool corresponding to the uplink CG type1 and the periodicity 3 corresponding to the index number "2" in the SPS configuration pool corresponding to the uplink CG type1.

Correspondingly, "1:{1, 2, 3}" indicates that uplink CG type1 configuration information that can be cycled and that is corresponding to the index number "1" (an index1) in the SPS activation pool corresponding to the uplink CG type1 is the periodicity 2 corresponding to the index number "1" in the SPS configuration pool corresponding to the uplink CG type1, the periodicity 3 corresponding to the index number "2" in the SPS configuration pool corresponding to the uplink CG type1, and the periodicity 4 corresponding to the index number "3" in the SPS configuration pool corresponding to the uplink CG type1.

Correspondingly, "2:{3, 1}" indicates that uplink CG type1 configuration information that can be cycled and that is corresponding to the index number "2" (an index2) in the SPS activation pool corresponding to the uplink CG type1 is the periodicity 4 corresponding to the index number "3" in the SPS configuration pool corresponding to the uplink CG type1 and the periodicity 2 corresponding to the index number "1" in the SPS configuration pool.

Correspondingly, "3:{3, 2}" indicates that uplink CG type1 configuration information that can be cycled and that is corresponding to the index number "3" (an index3) in the SPS activation pool corresponding to the uplink CG type1 is the periodicity 4 corresponding to the index number "3" in the SPS configuration pool corresponding to the uplink CG type1 and the periodicity 3 corresponding to the index number "2" in the SPS configuration pool corresponding to the uplink CG type1.

It should be understood that the foregoing descriptions are merely examples provided for better understanding of the technical solutions in this embodiment, and are not construed as the only limitation on this embodiment.

In addition, in the solution in which the SPS activation pool is configured, it may be agreed that eight bits in the newly defined MAC CE used to modify the scheduling periodicity are corresponding to an index number of one piece of uplink CG type1 activation information in the SPS activation pool corresponding to the uplink CG type1. In this case, "00000000" to "11111111" may be corresponding to index numbers of 256 pieces of SPS activation information, and a plurality of pieces of uplink CG type1 configuration information that can be cycled and that is corresponding to an index number of each piece of uplink CG type1 activation information may be configured based on a service requirement. In this way, more configuration manners can be supported, and there are more uplink CG type1 cycle periodicities, that is, multi-periodicity cycling is implemented.

Therefore, in the technical solutions provided in this embodiment, the gNB preconfigures the SPS configuration pool and the SPS activation pool, and modifies the cycle periodicity of the uplink CG type1 by using the newly defined MAC CE, to enable the UE to dynamically modify the cycle periodicity of the uplink CG type1, so that the semi-persistent scheduling periodicity matches a periodicity of a service with a periodic characteristic. This reduces power consumption of the user equipment and a delay in a service processing process and improves user experience, and can effectively avoid decrease in a system capacity of the base station by making the SPS scheduling periodicity match the periodicity of the service.

Likewise, in an actual application scenario, the technical solutions provided in this embodiment are also applicable to a single-periodicity service scenario. A person skilled in the art may perform setting based on a service requirement. This is not limited in this embodiment.

It can be learned from the descriptions of the foregoing two embodiments that for the uplink CG type1, specifically, the cycle periodicity is dynamically modified for the uplink CG type1 based on the MAC CE for reconfiguring the SPS periodicity by using the newly added identifier and the SPS configuration pool or a combination of the MAC CE for reconfiguring the SPS periodicity, the SPS configuration pool, and the SPS activation pool, so that the cycle periodicity can be dynamically modified for the uplink CG type1 based on an actual service, pre-allocated radio resources can be cyclically scheduled based on the reconfigured multi-periodicity, and the semi-persistent scheduling periodicity matches a periodicity of a service with a periodic characteristic. This reduces the power consumption of the user equipment and the delay in the service processing process and improves user experience, and can effectively avoid decrease in the system capacity of the base station by making the SPS scheduling periodicity match the periodicity of the service.

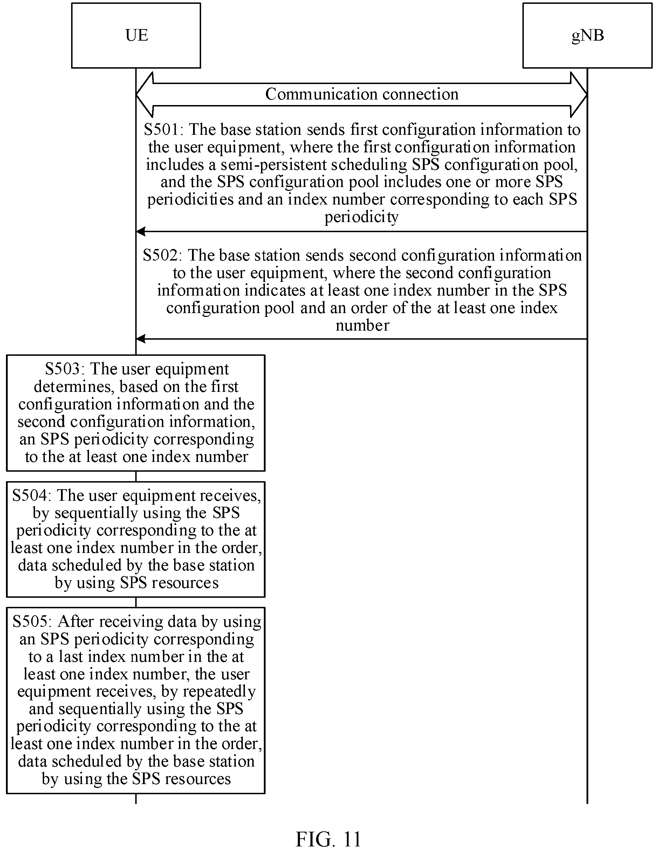

In addition, it should be noted that for the first implementation of the foregoing solution 1 and the first implementation of the foregoing solution 2, in a specific implementation, the foregoing semi-persistent scheduling methods may be implemented by using a procedure shown in FIG. 11.

For example, as shown in FIG. 11, the procedure for implementing semi-persistent scheduling by user equipment and a base station includes the following steps.

S501: The base station sends first configuration information to the user equipment, where the first configuration information includes a semi-persistent scheduling SPS configuration pool, and the SPS configuration pool includes one or more SPS periodicities and an index number corresponding to each SPS periodicity.

For example, after the base station sends the first configuration information to the user equipment, the user equipment receives the first configuration information from the base station.

In addition, it should be noted that in this embodiment, the first configuration information is borne in radio resource control RRC signaling. To be specific, the base station sends the first configuration information to the user equipment by using the RRC signaling, and the user equipment may obtain the first configuration information by parsing the received RRC signaling.

It can be understood that the SPS configuration pool included in the first configuration information in this embodiment is the SPS configuration pool mentioned in the embodiments corresponding to FIG. 5 and FIG. 8. A service scenario in which a service frame rate is 120 fps and an SCS is 30 kHz is used as an example. The one or more SPS periodicities and the index number corresponding to each SPS periodicity that are included in the SPS configuration pool included in the first configuration information may be as follows:
Sps-config{index0, periodicity of 8.5 ms, ...};
Sps-config{index1, periodicity of 8.5 ms, ...}; and
Sps-config{index2, periodicity of 8 ms, ... }.

It should be understood that the foregoing descriptions are merely examples provided for better understanding of the technical solutions in this embodiment, and are not construed as the only limitation on this embodiment.

S502: The base station sends second configuration information to the user equipment, where the second configuration information indicates at least one index number in the SPS configuration pool and an order of the at least one index number.

For example, after the base station sends the second configuration information to the user equipment, the user equipment receives the second configuration information from the base station.

For example, the second configuration information is borne in downlink control information DCI or in a newly defined media access control control element MAC CE field (referred to as a MAC CE field used to modify an SPS periodicity below).

For example, when the second configuration information is borne in the DCI, the second configuration information may be specifically borne in a hybrid automatic repeat request HARQ acknowledgment field in the DCI in some implementations, or may be specifically borne in another idle field not used in an activation phase in some other implementations. These are not enumerated herein, and are not limited in this embodiment.

It can be understood that, according to the foregoing descriptions of the activation manners for the downlink SPS, the uplink CG type1, and the uplink CG type2, for the downlink SPS and the uplink CG type2, the second configuration information is borne in the HARQ field in the DCI; and for the uplink CG type1, the second configuration information is borne in the newly defined MAC CE field used to modify the SPS periodicity.

Moreover, according to the descriptions of the association relationships between a service frame rate, an SCS, and an SPS periodicity in the foregoing embodiments, the second configuration information sent to the user equipment is specifically an SPS periodicity that matches a service frequency and that is selected from the one or more SPS periodicities included in the SPS configuration pool based on a service frame rate at which service data is transmitted with the user equipment.

In addition, it should be noted that for a manner of configuring a cyclically used SPS periodicity for the user equipment by bearing the second configuration information in the MAC CE field, the base station further needs to send third configuration information to the user equipment. The third configuration information indicates an initial cycle periodicity in which the user equipment receives data that is scheduled by the base station by using SPS resources.

For example, a form of the third configuration information may be, for example, the form of the initial cycle periodicity listed in the embodiment corresponding to FIG. 8: CG-ConfigActivation {index1, index3}.

Specifically, in the scenario in which the base station sends the first configuration information, that is, the SPS configuration pool, to the user equipment, the third configuration information indicates the index number corresponding to each cyclically used SPS periodicity. In other words, the index1 and the index3 are respectively corresponding to index numbers in the SPS configuration pool.

For example, in actual application, the third configuration information may also be borne in RRC signaling. To be specific, the base station sends the third configuration information to the user equipment by using the RRC signaling, and the user equipment may obtain the third configuration information by parsing the RRC signaling.

It can be understood that in actual application, in a scenario that the base station sends only the first configuration information to the user equipment, the first configuration information and the third configuration information may be sent to the user equipment by using a same piece of RRC signaling.

It should be understood that the foregoing descriptions are merely examples provided for better understanding of the technical solutions in this embodiment, and are not construed as the only limitation on this embodiment.

In addition, it should be noted that in the scenario in which the second configuration information is borne in the MAC CE field, that is, for the uplink CG type1, the MAC CE field used to modify the SPS periodicity needs to be defined before the second configuration information is sent to the user equipment. For details about a manner of defining the MAC CE field used to modify the SPS periodicity, refer to descriptions in the foregoing embodiments. Details are not described herein again.

S503: The user equipment determines, based on the first configuration information and the second configuration information, an SPS periodicity corresponding to the at least one index number.

Specifically, based on the at least one index number that is in the SPS configuration pool and that is indicated by the second configuration information, the SPS periodicity corresponding to the at least one index number is determined from the SPS configuration pool included in the first configuration information.

For example, content indicated by the second configuration information is an index0 and an index2 in the SPS configuration pool. In this case, determined SPS periodicities are an SPS periodicity corresponding to the index0, for example, 8.5 ms in the foregoing example, and an SPS periodicity corresponding to the index2, for example, 8 ms in the foregoing example.

S504: The user equipment receives, by sequentially using the SPS periodicity corresponding to the at least one index number in the order, data scheduled by the base station by using the SPS resources.

The example given in step S503 is still used for description. When the order of the at least one index number indicated in the second configuration information is the index0 and the index2, the user equipment receives, in the order of 8.5 ms and 8 ms, data scheduled by the base station by using the SPS resources.

S505: After receiving data by using an SPS periodicity corresponding to a last index number in the at least one index number, the user equipment receives, by repeatedly and sequentially using the SPS periodicity corresponding to the at least one index number in the order, data scheduled by the base station by using the SPS resources.

The example given in step S504 is still used for description. After receiving data by using the SPS periodicity of 8 ms, the user equipment receives, by repeatedly and sequentially using the SPS periodicity corresponding to the at least one index number in the order, data scheduled by the base station by using the SPS resources, that is, receives, by cyclically using the order of 8.5 ms, 8 ms, 8.5 ms, 8 ms, and so on, the data scheduled by the base station by cyclically using the SPS resources.

Therefore, the user equipment can receive, by repeatedly using the SPS periodicity corresponding to the at least one index number in the order indicated by the second configuration information, the data scheduled by the base station by using the SPS resources, so that the semi-persistent scheduling periodicity matches a periodicity of a service with a periodic characteristic. This reduces impact of a delay on user experience, reduces power consumption of the user equipment, and can avoid decrease in a system capacity of the base station.

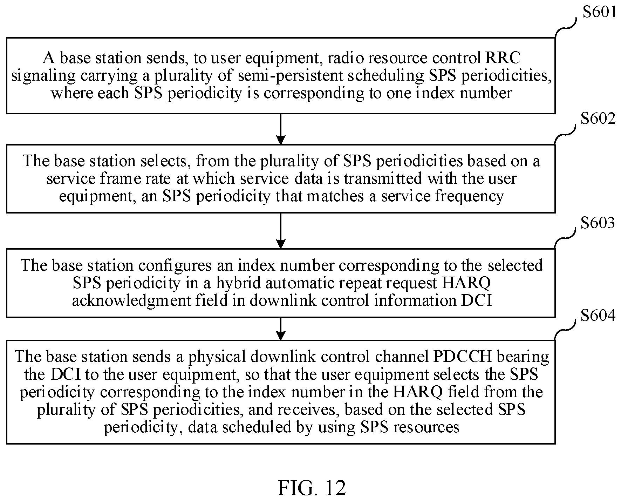

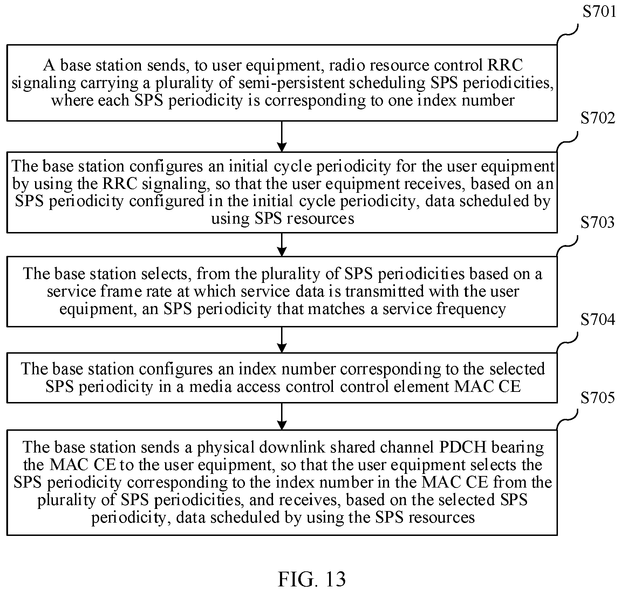

In addition, for better understanding of the semi-persistent scheduling methods provided in embodiments of this application, the following separately describes the two implementations of the foregoing solution 1 and the two implementations of the foregoing solution 2 in detail from a perspective of a base station with reference to FIG. 12 and FIG. 13.

For the two implementations of the foregoing solution 1, in a specific implementation, the foregoing semi-persistent scheduling method is specifically implemented by the base station.

For example, as shown in FIG. 12, the semi-persistent scheduling method applied to the base station includes the following steps.

S601: The base station sends, to user equipment, radio resource control RRC signaling carrying a plurality of semi-persistent scheduling SPS periodicities, where each SPS periodicity is corresponding to one index number.

For example, it can be learned from the two implementations of the foregoing solution 1 that the plurality of SPS periodicities sent by the base station to the user equipment by using the RRC signaling may be in a form of an SPS configuration pool alone or in a form of a combination of an SPS configuration pool and an SPS activation pool.

Sending the plurality of SPS periodicities in the form of the SPS configuration pool may be, for example, that the base station sends, to the user equipment, the RRC signaling carrying the SPS configuration pool. The SPS configuration pool includes N pieces of semi-persistent resource configuration information, and each piece of semi-persistent resource configuration information is corresponding to one index number and includes one SPS periodicity, where N is an integer greater than 0.

For configurations of the SPS configuration pool and a relationship between an SPS periodicity and an index number in the SPS configuration pool, refer to the embodiment corresponding to FIG. 5. Details are not described herein again.

Sending the plurality of SPS periodicities in the form of the combination of the SPS configuration pool and the SPS activation pool may be, for example, that the base station sends, to the user equipment, the RRC signaling carrying the SPS configuration pool and the SPS activation pool. The SPS configuration pool includes N pieces of semi-persistent resource configuration information, and each piece of semi-persistent resource configuration information is corresponding to one index number and includes one SPS periodicity. The SPS activation pool includes M key-value pairs, and a value corresponding to each key includes at least one index number in the SPS configuration pool. N is an integer greater than 0, and M is an integer greater than 0.

For configurations of the SPS configuration pool, configurations of the SPS activation pool, a relationship between an SPS periodicity and an index number in the SPS configuration pool, and a key and a corresponding value in the SPS activation pool (an index number of an SPS periodicity in the SPS configuration pool), refer to the embodiments corresponding to FIG. 5 and FIG. 6. Details are not described herein again.

S602: The base station selects, from the plurality of SPS periodicities based on a service frame rate at which service data is transmitted with the user equipment, an SPS periodicity that matches a service frequency.

It can be learned from the foregoing descriptions that the plurality of SPS periodicities are configured in the SPS configuration pool. Therefore, during selection of the SPS periodicity that matches the service frame rate, the base station specifically selects, from the SPS configuration pool based on the service frame rate at which service data is transmitted with the user equipment, the SPS periodicity that matches the service frequency.

Regarding how to select the matched SPS periodicity based on the service frame rate, refer to the embodiments corresponding to FIG. 5 and FIG. 6. Details are not described herein again.

S603: The base station configures an index number corresponding to the selected SPS periodicity in a hybrid automatic repeat request HARQ acknowledgment field in downlink control information DCI.

For example, in the scenario in which the base station sends only the SPS configuration pool to the user equipment by using the RRC signaling, the base station specifically configures a binary code of the index number corresponding to the selected SPS periodicity in the HARQ field in the DCI.

It should be noted that in an implementation scenario in which the index number corresponding to the SPS periodicity is configured directly by using the HARQ field, that every two bits are corresponding to an index number of one SPS periodicity needs to be agreed in advance. For a specific implementation, refer to the embodiment corresponding to FIG. 5. Details are not described herein again.

For example, in the scenario in which the RRC signaling sent by the base station to the user equipment carries both the SPS configuration pool and the SPS activation pool, the base station needs to first determine, based on the index number corresponding to the selected SPS periodicity, a key that is in the SPS activation pool and that is corresponding to the index number; and then the base station configures the determined key in the HARQ field in the DCI.

Correspondingly, that the base station configures the determined key in the HARQ field in the DCI is specifically configuring a binary code corresponding to the determined key in the HARQ field in the DCI.

It can be understood that in such an implementation, content corresponding to bits in the HARQ field also needs to be agreed in advance. Specifically, it may be agreed that four bits in the HAQR field are corresponding to one key in the SPS activation pool. For a specific implementation, refer to the embodiment corresponding to FIG. 6. Details are not described herein again.

S604: The base station sends a physical downlink control channel PDCCH bearing the DCI to the user equipment, so that the user equipment selects the SPS periodicity corresponding to the index number in the HARQ field from the plurality of SPS periodicities, and receives, based on the selected SPS periodicity, data scheduled by the gNB by using SPS resources.

Therefore, in the method provided in this embodiment, dual-periodicities or multi-periodicities (or single-periodicities) are configured for the uplink CG type2 and the downlink SPS, so that pre-allocated radio resources can be cyclically scheduled in the uplink CG type2 and the downlink SPS based on the configured dual-periodicities or multi-periodicities, and the semi-persistent scheduling periodicity matches a periodicity of a service with a periodic characteristic. This reduces power consumption of the user equipment and a delay in a service processing process and improves user experience, and can effectively avoid decrease in a system capacity of the base station by making the SPS scheduling periodicity match the periodicity of the service.

For the two implementations of the foregoing solution 2, in a specific implementation, the foregoing semi-persistent scheduling method is also implemented by the base station.

For example, as shown in FIG. 13, the semi-persistent scheduling method applied to the base station includes the following steps.

S701: The base station sends, to user equipment, radio resource control RRC signaling carrying a plurality of semi-persistent scheduling SPS periodicities, where each SPS periodicity is corresponding to one index number.

For example, it can be learned from the two implementations of the foregoing solution 2 that the plurality of SPS periodicities sent by the base station to the user equipment by using the RRC signaling may be in a form of an SPS configuration pools alone or in a form of a combination of an SPS configuration pool and an SPS activation pool.

Sending the plurality of SPS periodicities in the form of the SPS configuration pool may be, for example, that the base station sends, to the user equipment, the RRC signaling carrying the SPS configuration pool. The SPS configuration pool includes N pieces of semi-persistent resource configuration information, and each piece of semi-persistent resource configuration information is corresponding to one index number and includes one SPS periodicity, where N is an integer greater than 0.

For configurations of the SPS configuration pool and a relationship between an SPS periodicity and an index number in the SPS configuration pool, refer to the embodiment corresponding to FIG. 8. Details are not described herein again.

Sending the plurality of SPS periodicities in the form of the combination of the SPS configuration pool and the SPS activation pool may be, for example, that the base station sends, to the user equipment, the RRC signaling carrying the SPS configuration pool and the SPS activation pool. The SPS configuration pool includes N pieces of semi-persistent resource configuration information, and each piece of semi-persistent resource configuration information is corresponding to one index number and includes one SPS periodicity. The SPS activation pool includes M key-value pairs, and a value corresponding to each key includes at least one index number in the SPS configuration pool. N is an integer greater than 0, and M is an integer greater than 0.

For configurations of the SPS configuration pool, configurations of the SPS activation pool, a relationship between an SPS periodicity and an index number in the SPS configuration pool, and a key and a corresponding value in the SPS activation pool (an index number of an SPS periodicity in the SPS configuration pool), refer to the embodiments corresponding to FIG. 8 and FIG. 10. Details are not described herein again.

S702: The base station configures an initial cycle periodicity for the user equipment by using the RRC signaling, so that the user equipment receives, based on an SPS periodicity configured in the initial cycle periodicity, data scheduled by the gNB by using SPS resources.

For a manner of configuring the initial cycle periodicity by the base station for the user equipment by using the RRC signaling, refer to the embodiment corresponding to FIG. 8. Details are not described herein again.

S703: The base station selects, from the plurality of SPS periodicities based on a service frame rate at which service data is transmitted with the user equipment, an SPS periodicity that matches a service frequency.

It can be learned from the foregoing descriptions that the plurality of SPS periodicities are configured in the SPS configuration pool. Therefore, during selection of the SPS periodicity that matches the service frame rate, the base station specifically selects, from the SPS configuration pool based on the service frame rate at which service data is transmitted with the user equipment, the SPS periodicity that matches the service frequency.

Regarding how to select the matched SPS periodicity based on the service frame rate, refer to the embodiments corresponding to FIG. 8 and FIG. 10. Details are not described herein again.

S704: The base station configures an index number corresponding to the selected SPS periodicity in a media access control control element MAC CE.

For example, in the scenario in which the base station sends only the SPS configuration pool to the user equipment by using the RRC signaling, the base station specifically configures a binary code of the index number corresponding to the selected SPS periodicity in the MAC CE.

It should be noted that in an implementation scenario in which the index number corresponding to the SPS periodicity is configured directly by using the MAC CE, a size of bits of the MAC CE and content corresponding to the bits need to be agreed in advance.

For example, in some implementation scenarios, it may be agreed that the MAC CE has eight bits and that every two bits are corresponding to an index number of one SPS periodicity. For a specific implementation, refer to the embodiment corresponding to FIG. 8. Details are not described herein again.

For example, in the scenario in which the RRC signaling sent by the base station to the user equipment carries both the SPS configuration pool and the SPS activation pool, the base station needs to first determine, based on the index number corresponding to the selected SPS periodicity, a key that is in the SPS activation pool and that is corresponding to the index number; and then the base station configures the determined key in the MAC CE.

Correspondingly, that the base station configures the determined key in the MAC CE is specifically configuring a binary code corresponding to the determined key in the MAC CE.

It can be understood that in such an implementation, a size of bits of the MAC CE and content corresponding to the bits also need to be agreed in advance.

For example, in some implementation scenarios, it may be agreed that the MAC CE has eight bits and that values of the eight bits are corresponding to one key in the SPS activation pool. For a specific implementation, refer to the embodiments corresponding to FIG. 8 and FIG. 10. Details are not described herein again.

S705: The base station sends a physical downlink shared channel PDCSH bearing the MAC CE to the user equipment, so that the user equipment selects the SPS periodicity corresponding to the index number in the MAC CE from the plurality of SPS periodicities, and receives, based on the selected SPS periodicity, data scheduled by the gNB by using the SPS resources.

Therefore, in the method provided in this embodiment, the cycle periodicity is dynamically modified for the uplink CG type1, so that the cycle periodicity can be dynamically modified for the uplink CG type1 based on an actual service, pre-allocated radio resources can be cyclically scheduled based on the reconfigured multi-periodicity, and the semi-persistent scheduling periodicity matches a periodicity of a service with a periodic characteristic. This reduces power consumption of the user equipment and a delay in a service processing process and improves user experience, and can effectively avoid decrease in a system capacity of the base station by making the SPS scheduling periodicity match the periodicity of the service.

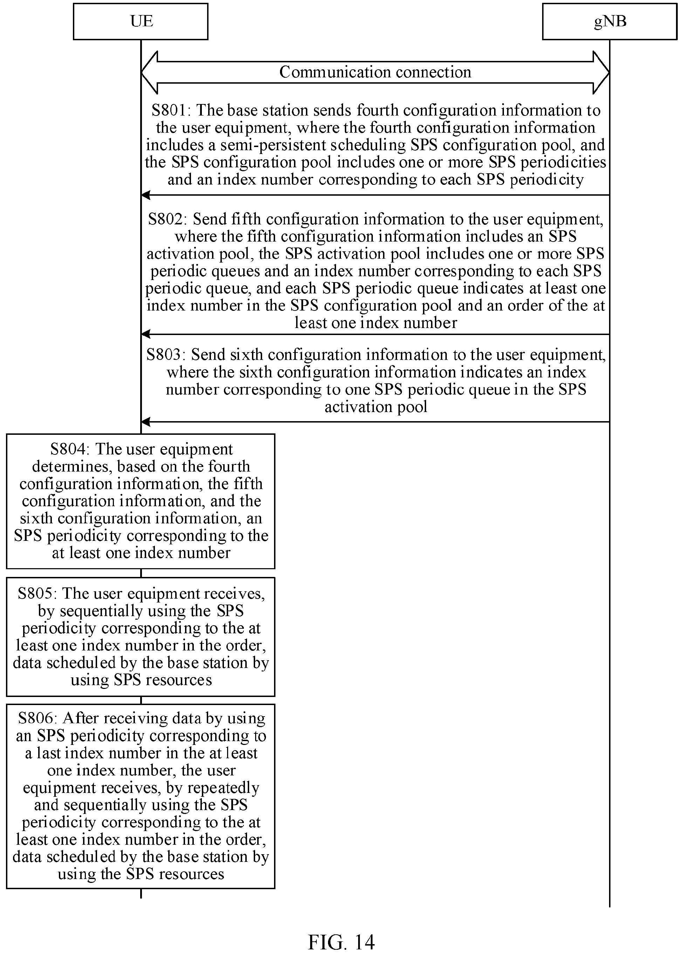

In addition, it should be noted that for the second implementation of the foregoing solution 1 and the second implementation of the foregoing solution 2, in a specific implementation, the foregoing semi-persistent scheduling methods may be implemented by using a procedure shown in FIG. 14.

For example, as shown in FIG. 14, the procedure for implementing semi-persistent scheduling by user equipment and a base station includes the following steps.

S801: The base station sends fourth configuration information to the user equipment, where the fourth configuration information includes a semi-persistent scheduling SPS configuration pool, and the SPS configuration pool includes one or more SPS periodicities and an index number corresponding to each SPS periodicity.

For example, after the base station sends the fourth configuration information to the user equipment, the user equipment receives the fourth configuration information from the base station.

In addition, it should be noted that in this embodiment, the fourth configuration information is borne in radio resource control RRC signaling. To be specific, the base station sends the fourth configuration information to the user equipment by using the RRC signaling, and the user equipment may obtain the fourth configuration information by parsing the received RRC signaling.

It can be understood that the SPS configuration pool included in the fourth configuration information in this embodiment is the SPS configuration pool mentioned in the embodiments corresponding to FIG. 6 and FIG. 10. A service scenario in which a service frame rate is 120 fps and an SCS is 30 kHz is used as an example. The one or more SPS periodicities and the index number corresponding to each SPS periodicity that are included in the SPS configuration pool included in the fourth configuration information may be as follows:
Sps-config{index0, periodicity of 8.5 ms, ...};
Sps-config{index1, periodicity of 8.5 ms, ...}; and
Sps-config{index2, periodicity of 8 ms, ... }.

It should be understood that the foregoing descriptions are merely examples provided for better understanding of the technical solutions in this embodiment, and are not construed as the only limitation on this embodiment.

S802: Send fifth configuration information to the user equipment, where the fifth configuration information includes an SPS activation pool, the SPS activation pool includes one or more SPS periodic queues and an index number corresponding to each SPS periodic queue, and each SPS periodic queue indicates at least one index number in the SPS configuration pool and an order of the at least one index number.

It should be noted that, to enable a configured cyclically used SPS periodicity to match diversified service scenarios, the base station further needs to send the fifth configuration information to the user equipment. The fifth configuration information includes the SPS activation pool, and the SPS activation pool includes the one or more SPS periodic queues and the index number corresponding to each SPS periodic queue. In addition, each SPS periodic queue indicates the at least one index number in the SPS configuration pool and the order of the at least one index number.

For example, in actual application, the SPS activation pool included in the fifth configuration information is the SPS activation pool mentioned in the embodiments corresponding to FIG. 6 and FIG. 10. A form of the SPS activation pool may be, for example, sps-ConfigActivationList {0:{0, 1}, 1:{0, 1, 2}, 2:{3, 1}, 3:{3, 2}, ...} listed in the embodiment corresponding to FIG. 6.

It can be understood that in a scenario in which the base station sends the fifth configuration information to the user equipment, the user equipment not only receives the fourth configuration information from the base station, but also receives the fifth configuration information from the base station.

For example, in actual application, the fifth configuration information may also be borne in RRC signaling. To be specific, the base station sends the fifth configuration information to the user equipment by using the RRC signaling, and the user equipment may obtain the fifth configuration information by parsing the received RRC signaling.

It can be understood that in actual application, the fourth configuration information and the fifth configuration information may be sent to the user equipment by using a same piece of RRC signaling.

S803: Send sixth configuration information to the user equipment, where the sixth configuration information indicates an index number corresponding to one SPS periodic queue in the SPS activation pool.

For example, after the base station sends the sixth configuration information to the user equipment, the user equipment receives the sixth configuration information from the base station.

For example, the sixth configuration information is borne in downlink control information DCI or in a newly defined media access control control element MAC CE field (referred to as a MAC CE field used to modify an SPS periodicity below).

For example, when the sixth configuration information is borne in the DCI, the sixth configuration information may be specifically borne in a hybrid automatic repeat request HARQ acknowledgment field in the DCI in some implementations, or may be specifically borne in another idle field not used in an activation phase in some other implementations. These are not enumerated herein, and are not limited in this embodiment.

It can be understood that, according to the foregoing descriptions of the activation manners for the downlink SPS, the uplink CG type1, and the uplink CG type2, for the downlink SPS and the uplink CG type2, the sixth configuration information is borne in the HARQ field in the DCI; and for the uplink CG type1, the sixth configuration information is borne in the newly defined MAC CE field used to modify the SPS periodicity.

Moreover, according to the descriptions of the association relationships between a service frame rate, an SCS, and an SPS periodicity in the foregoing embodiments, the sixth configuration information sent to the user equipment is specifically an SPS periodicity that matches a service frequency and that is selected from the one or more SPS periodicities included in the SPS configuration pool based on a service frame rate at which service data is transmitted with the user equipment.

In addition, it should be noted that for a manner of configuring the cyclically used SPS periodicity for the user equipment by bearing the sixth configuration information in the MAC CE field, the base station further needs to send seventh configuration information to the user equipment. The seventh configuration information indicates an initial cycle periodicity in which the user equipment receives data that is scheduled by the base station by using SPS resources.

For example, a form of the seventh configuration information may be, for example, the form of the initial cycle periodicity listed in the embodiment corresponding to FIG. 8: CG-ConfigActivation {index1, index3}.

Specifically, in the scenario in which the base station sends the fourth configuration information and the fifth configuration information, that is, the SPS configuration pool and the SPS activation pool, to the user equipment, the fifth configuration information indicates an index number corresponding to one cyclically used SPS periodic queue. In other words, the index1 and the index3 are respectively corresponding to index numbers in the SPS activation pool.

In addition, it should be noted that, when content indicated in the initial cycle periodicity is the index number corresponding to the SPS periodic queue in the sixth configuration information, specific content included in the SPS periodic queue is an index number corresponding to at least one SPS periodicity in the fourth configuration information.

For example, in actual application, the seventh configuration information may also be borne in RRC signaling. To be specific, the base station sends the seventh configuration information to the user equipment by using the RRC signaling, and the user equipment may obtain the seventh configuration information by parsing the RRC signaling.

It can be understood that in actual application, in a scenario that the base station sends the fourth configuration information and the fifth configuration information to the user equipment, the fourth configuration information, the fifth configuration information, and the seventh configuration information may be sent to the user equipment by using a same piece of RRC signaling.

It should be understood that the foregoing descriptions are merely examples provided for better understanding of the technical solutions in this embodiment, and are not construed as the only limitation on this embodiment.

In addition, it should be noted that in the scenario in which the sixth configuration information is borne in the MAC CE field, that is, for the uplink CG type1, the MAC CE field used to modify the SPS periodicity needs to be defined before the sixth configuration information is sent to the user equipment. For details about a manner of defining the MAC CE field used to modify the SPS periodicity, refer to descriptions in the foregoing embodiments. Details are not described herein again.

S804: The user equipment determines, based on the fourth configuration information, the fifth configuration information, and the sixth configuration information, an SPS periodicity corresponding to the at least one index number.

Specifically, the SPS periodic queue that is in the SPS activation pool and that is corresponding to the index number indicated by the sixth configuration information is determined based on the fifth configuration information and the sixth configuration information; and the SPS periodicity corresponding to the at least one index number is determined based on the fourth configuration information and the determined SPS periodic queue.

S805: The user equipment receives, by sequentially using the SPS periodicity corresponding to the at least one index number in the order, data scheduled by the base station by using the SPS resources.

S806: After receiving data by using an SPS periodicity corresponding to a last index number in the at least one index number, the user equipment receives, by repeatedly and sequentially using the SPS periodicity corresponding to the at least one index number in the order, data scheduled by the base station by using the SPS resources.

For implementations of step S805 and step S806, refer to descriptions of step S504 and step S505 in the embodiment corresponding to FIG. 11. Details are not described herein again.

In addition, an embodiment of this application further provides user equipment. The user equipment is configured to perform the foregoing semi-persistent scheduling method provided in any one of the embodiments applied to the user equipment.

Moreover, an embodiment of this application further provides a base station. The base station is configured to perform the foregoing semi-persistent scheduling method provided in any one of the embodiments applied to the base station.

Furthermore, an embodiment of this application further provides a communication system.

Specifically, in this embodiment, the communication system includes user equipment (UE) and a base station. The user equipment is configured to perform the foregoing semi-persistent scheduling method provided in any one of the embodiments applied to the user equipment, and the base station is configured to perform the foregoing semi-persistent scheduling method provided in any one of the embodiments applied to the base station.

The foregoing descriptions about implementations allow a person skilled in the art to clearly understand that, for the purpose of convenient and brief description, the foregoing functional modules obtained through division are used as examples for illustration. In actual application, the foregoing functions can be allocated to different functional modules for implementation according to a requirement, that is, an inner structure of an apparatus is divided into different functional modules to implement all or some of the functions described above. For detailed working processes of the system, apparatuses, and units described above, refer to corresponding processes in the foregoing method embodiments. Details are not described herein again.

In the several embodiments provided in this embodiment, it should be understood that the disclosed system, apparatuses, and methods may be implemented in other manners. For example, the described apparatus embodiments are merely examples. For example, the module or unit division is merely logical function division and may be other division in actual implementation. For example, a plurality of units or components may be combined or may be integrated into another system, or some features may be ignored or not be performed. In addition, the displayed or discussed mutual couplings or direct couplings or communication connections may be implemented through some interfaces. The indirect couplings or communication connections between the apparatuses or units may be implemented in an electrical form, a mechanical from, or another form.

The units described as separate parts may or may not be physically separate, and parts displayed as units may or may not be physical units. To be specific, the parts may be located in one place or may be distributed on a plurality of network units. Some or all of the units may be selected depending on an actual requirement to achieve the objectives of the solutions of embodiments.

In addition, functional units in embodiments of this application may be integrated into one processing unit, each of the units may exist alone physically, or at least two units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of embodiments essentially, or the part contributing to the prior art, or all or some of the technical solutions may be implemented in the form of a software product. The software product is stored in a storage medium and includes several instructions for instructing a computer device (which may be a personal computer, a server, a network device, or the like) or a processor to perform all or some of the steps of the methods described in embodiments. The foregoing storage medium includes: any medium that can store program code, like a flash memory, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A semi-persistent scheduling method, applied to user equipment, wherein the method comprises:
receiving (S501) first configuration information from a base station, wherein the first configuration information comprises a semi-persistent scheduling SPS configuration pool, and the SPS configuration pool comprises one or more SPS periodicities and an index number corresponding to each SPS periodicity;
receiving (S502) second configuration information from the base station, wherein the second configuration information indicates at least one index number in the SPS configuration pool and an order of the at least one index number;
determining (S503), based on the first configuration information and the second configuration information, an SPS periodicity corresponding to the at least one index number;
receiving (S504), by sequentially using the SPS periodicity corresponding to the at least one index number in the order, data scheduled by the base station by using SPS resources; and
after data is received by using an SPS periodicity corresponding to a last index number in the at least one index number, receiving (S505), by repeatedly and sequentially using the SPS periodicity corresponding to the at least one index number in the order, data scheduled by the base station by using the SPS resources.

2. The method according to claim 1, wherein the second configuration information is borne in downlink control information DCI.

3. The method according to claim 2, wherein the second configuration information is borne in a hybrid automatic repeat request HARQ acknowledgment field in the DCI.

4. The method according to claim 1, wherein the second configuration information is borne in a media access control control element MAC CE field, wherein the MAC CE field is a MAC CE field defined by the base station for carrying the second configuration information.

5. The method according to claim 4, wherein the method further comprises:
receiving third configuration information from the base station, wherein the third configuration information indicates an initial cycle periodicity in which the user equipment receives data that is scheduled by the base station by using the SPS resources; and
the initial cycle periodicity indicates the at least one index number in the SPS configuration pool and the order of the at least one index number.

6. The method according to claim 5, wherein the first configuration information and the third configuration information are borne in radio resource control RRC signaling.

7. A semi-persistent scheduling method, applied to user equipment, wherein the method comprises:
receiving (S801) fourth configuration information from a base station, wherein the fourth configuration information comprises a semi-persistent scheduling SPS configuration pool, and the SPS configuration pool comprises one or more SPS periodicities and an index number corresponding to each SPS periodicity;
receiving (S802) fifth configuration information from the base station, wherein the fifth configuration information comprises an SPS activation pool, the SPS activation pool comprises one or more SPS periodic queues and an index number corresponding to each SPS periodic queue, and each SPS periodic queue indicates at least one index number in the SPS configuration pool and an order of the at least one index number;
receiving (S803) sixth configuration information from the base station, wherein the sixth configuration information indicates an index number corresponding to one 2 SPS periodic queue in the SPS activation pool;
determining (S804), based on the fourth configuration information, the fifth configuration information, and the sixth configuration information, an SPS periodicity corresponding to the at least one index number;
receiving (S805), by sequentially using the SPS periodicity corresponding to the at least one index number in the order, data scheduled by the base station by using SPS resources; and
after data is received by using an SPS periodicity corresponding to a last index number in the at least one index number, receiving (S806), by repeatedly and sequentially using the SPS periodicity corresponding to the at least one index number in the order, data scheduled by the base station by using the SPS resources.

8. The method according to claim 7, wherein the determining, based on the fourth configuration information, the fifth configuration information, and the sixth configuration information, an SPS periodicity corresponding to the at least one index number comprises:
determining, based on the fifth configuration information and the sixth configuration information, the SPS periodic queue that is in the SPS activation pool and that is corresponding to the index number indicated by the sixth configuration information; and
determining, based on the fourth configuration information and the determined SPS periodic queue, the SPS periodicity corresponding to the at least one index number.

9. The method according to claim 8, wherein the sixth configuration information is borne in downlink control information DCI.

10. The method according to claim 9, wherein the sixth configuration information is borne in a hybrid automatic repeat request HARQ acknowledgment field in the DCI.

11. The method according to claim 7 or 8, wherein the sixth configuration information is borne in a media access control control element MAC CE field, wherein the MAC CE field is a MAC CE field defined by the base station for carrying the sixth configuration information.

12. The method according to claim 11, wherein the method further comprises:
receiving seventh configuration information from the base station, wherein the seventh configuration information indicates an initial cycle periodicity in which the user equipment receives data that is scheduled by the base station by using the SPS resources; and
the initial cycle periodicity indicates the index number corresponding to the one SPS periodic queue in the SPS activation pool.

13. The method according to claim 12, wherein the fourth configuration information, the fifth configuration information, and the seventh configuration information are borne in radio resource control RRC signaling.

14. A user equipment, wherein the user equipment is configured to perform the semi-persistent scheduling method of any one of claims 1 to 6.

15. A user equipment, wherein the user equipment is configured to perform the semi-persistent scheduling method of any one of claims 7 to 13.

## Patentansprüche

1. Ein semi-persistentes Scheduling-Verfahren, angewendet auf ein Benutzergerät, wobei das Verfahren Folgendes umfasst:
Empfangen (S501) von ersten Konfigurationsinformationen von einer Basisstation, wobei die ersten Konfigurationsinformationen einen semi-persistenten Scheduling-SPS-Konfigurationspool umfassen und der SPS-Konfigurationspool eine oder mehrere SPS-Periodizitäten sowie eine Indexnummer, die jeder SPS-Periodizität entspricht, beinhaltet;
Empfangen (S502) von zweiten Konfigurationsinformationen von der Basisstation, wobei die zweiten Konfigurationsinformationen mindestens eine Indexnummer im SPS-Konfigurationspool sowie die Reihenfolge der mindestens einen Indexnummer anzeigen;
Bestimmen (S503) einer SPS-Periodizität, die der mindestens einen Indexnummer entspricht, basierend auf den ersten und zweiten Konfigurationsinformationen;
Empfangen (S504) von durch die Basisstation mittels SPS-Ressourcen geplanten Daten, indem die der mindestens einen Indexnummer entsprechende SPS-Periodizität in der Reihenfolge nacheinander genutzt wird; und
Nachdem Daten mit einer der letzten Indexnummer entsprechenden SPS-Periodizität empfangen wurden, werden (S505) die Daten, die durch die Basisstation mittels SPS-Ressourcen geplant sind, durch wiederholte und sequentielle Nutzung der der mindestens einen Indexnummer in der Reihenfolge entsprechenden SPS-Periodizität empfangen.

2. Verfahren gemäß Anspruch 1, wobei die zweiten Konfigurationsinformationen in Downlink Control Information DCI übertragen werden.

3. Verfahren gemäß Anspruch 2, wobei die zweiten Konfigurationsinformationen in einem Hybrid Automatic Repeat Request HARQ-Acknowledgment-Feld in der DCI übertragen werden.

4. Verfahren gemäß Anspruch 1, wobei die zweiten Konfigurationsinformationen in einem Media Access Control Control Element MAC CE-Feld übertragen werden, wobei das MAC CE-Feld ein von der Basisstation zur Übertragung der zweiten Konfigurationsinformationen definiertes MAC CE-Feld ist.

5. Verfahren gemäß Anspruch 4, wobei das Verfahren weiterhin umfasst:
Empfangen von dritten Konfigurationsinformationen von der Basisstation, wobei die dritten Konfigurationsinformationen eine anfängliche Zyklusperiodizität anzeigen, in der das Benutzergerät Daten empfängt, die von der Basisstation mit Hilfe der SPS-Ressourcen geplant wurden; und
die anfängliche Zyklusperiodizität zeigt die mindestens eine Indexnummer im SPS-Konfigurationspool und die Reihenfolge der mindestens einen Indexnummer an.

6. Verfahren gemäß Anspruch 5, wobei die ersten und dritten Konfigurationsinformationen in Radio Resource Control RRC-Signalisierung übertragen werden.

7. Ein semi-persistentes Scheduling-Verfahren, angewendet auf ein Benutzergerät, wobei das Verfahren Folgendes umfasst:
Empfangen (S801) von vierter Konfigurationsinformation von einer Basisstation, wobei die vierte Konfigurationsinformation einen Semi-Persistent Scheduling (SPS)-Konfigurationspool umfasst, und der SPS-Konfigurationspool eine oder mehrere SPS-Periodizitäten sowie eine Indexnummer, die jeder SPS-Periodizität entspricht, enthält;
Empfangen (S802) von fünfter Konfigurationsinformation von der Basisstation, wobei die fünfte Konfigurationsinformation einen SPS-Aktivierungspool umfasst, der SPS-Aktivierungspool eine oder mehrere SPS-periodische Warteschlangen sowie eine Indexnummer, die jeder SPS-periodischen Warteschlange entspricht, enthält, und jede SPS-periodische Warteschlange mindestens eine Indexnummer im SPS-Konfigurationspool und deren Reihenfolge angibt;
Empfangen (S803) von sechster Konfigurationsinformation von der Basisstation, wobei die sechste Konfigurationsinformation eine Indexnummer angibt, die einer SPS-periodischen Warteschlange im SPS-Aktivierungspool entspricht;
Ermitteln (S804), basierend auf der vierten, fünften und sechsten Konfigurationsinformation, einer SPS-Periodizität, die der mindestens einen Indexnummer entspricht;
Empfangen (S805), indem die SPS-Periodizität, die der mindestens einen Indexnummer in der angegebenen Reihenfolge entspricht, sequenziell verwendet wird, von der Basisstation durch die SPS-Ressourcen geplante Daten; und
Nachdem Daten mithilfe der SPS-Periodizität empfangen wurden, die der letzten Indexnummer der mindestens einen Indexnummer entspricht, werden (S806) durch wiederholtes und sequenzielles Verwenden der SPS-Periodizität entsprechend der Reihenfolge der mindestens einen Indexnummer weiterhin von der Basisstation mit den SPS-Ressourcen geplante Daten empfangen.

8. Verfahren nach Anspruch 7, wobei das Ermitteln, basierend auf der vierten, fünften und sechsten Konfigurationsinformation, einer SPS-Periodizität, die der mindestens einen Indexnummer entspricht, Folgendes umfasst:
Ermitteln, basierend auf der fünften und sechsten Konfigurationsinformation, der SPS-periodischen Warteschlange, die sich im SPS-Aktivierungspool befindet und der durch die sechste Konfigurationsinformation angegebenen Indexnummer entspricht; und
Ermitteln, basierend auf der vierten Konfigurationsinformation und der bestimmten SPS-periodischen Warteschlange, der SPS-Periodizität, die der mindestens einen Indexnummer entspricht.

9. Verfahren nach Anspruch 8, wobei die sechste Konfigurationsinformation in Downlink Control Information (DCI) getragen wird.

10. Verfahren nach Anspruch 9, wobei die sechste Konfigurationsinformation in einem Hybrid Automatic Repeat Request (HARQ)-Bestätigungsfeld innerhalb des DCI getragen wird.

11. Verfahren gemäß Anspruch 7 oder 8, wobei die sechste Konfigurationsinformation in einem Medienzugriffssteuerungskontrollelement (MAC-CE)-Feld übertragen wird, wobei das MAC-CE-Feld ein von der Basisstation definiertes MAC-CE-Feld ist, das zum Transport der sechsten Konfigurationsinformation dient.

12. Verfahren gemäß Anspruch 11, wobei das Verfahren weiter umfasst:
Empfangen einer siebten Konfigurationsinformation von der Basisstation, wobei die siebte Konfigurationsinformation eine anfängliche Zyklusperiodizität angibt, in der die Benutzergeräte Daten empfangen, die von der Basisstation unter Verwendung der SPS-Ressourcen geplant wurden; und
Die anfängliche Zyklusperiodizität gibt die Indexnummer an, die der einen SPS-Periodenwarteschlange im SPS-Aktivierungspool entspricht.

13. Verfahren gemäß Anspruch 12, wobei die vierte Konfigurationsinformation, die fünfte Konfigurationsinformation und die siebte Konfigurationsinformation in Funkressourcensteuerung (RRC)-Signalisierung übertragen werden.

14. Ein Benutzergerät, wobei das Benutzergerät dafür konfiguriert ist, das semipersistente Scheduling-Verfahren nach einem der Ansprüche 1 bis 6 auszuführen.

15. Ein Benutzergerät, wobei das Benutzergerät dafür konfiguriert ist, das semipersistente Scheduling-Verfahren nach einem der Ansprüche 7 bis 13 auszuführen.

## Revendications

1. Procédé de planification semi-persistante, appliqué à un équipement utilisateur, ledit procédé comprenant :
la réception (S501) d'une première information de configuration depuis une station de base, ladite première information de configuration comprenant un pool de planification semi-persistante (SPS), et le pool SPS comprenant une ou plusieurs périodicités SPS et un numéro d'index correspondant à chaque périodicité SPS ;
la réception (S502) d'une deuxième information de configuration depuis la station de base, ladite deuxième information de configuration indiquant au moins un numéro d'index dans le pool SPS et un ordre du ou des numéros d'index ;
la détermination (S503), sur la base de la première et de la deuxième information de configuration, d'une périodicité SPS correspondant au moins à un numéro d'index ;
la réception (S504), en utilisant séquentiellement la périodicité SPS correspondant au moins à un numéro d'index dans l'ordre, des données planifiées par la station de base à l'aide des ressources SPS ; et
après que les données ont été reçues en utilisant une périodicité SPS correspondant au dernier numéro d'index dans le ou les numéros d'index, la réception (S505), par utilisation répétée et séquentielle de la périodicité SPS correspondant au moins à un numéro d'index dans l'ordre, des données planifiées par la station de base à l'aide des ressources SPS.

2. Procédé selon la revendication 1, dans lequel la deuxième information de configuration est portée dans une information de contrôle en liaison descendante (DCI).

3. Procédé selon la revendication 2, dans lequel la deuxième information de configuration est portée dans un champ d'accusé de réception de demande de répétition automatique hybride (HARQ) dans la DCI.

4. Procédé selon la revendication 1, dans lequel la deuxième information de configuration est portée dans un champ d'élément de contrôle d'accès au support (MAC CE), ledit champ MAC CE étant défini par la station de base pour transporter la deuxième information de configuration.

5. Procédé selon la revendication 4, ledit procédé comprenant en outre :
la réception d'une troisième information de configuration de la part de la station de base, ladite troisième information de configuration indiquant une périodicité de cycle initial dans laquelle l'équipement utilisateur reçoit des données planifiées par la station de base en utilisant les ressources SPS ; et
où la périodicité de cycle initial indique au moins un numéro d'index dans le pool SPS et l'ordre du ou des numéros d'index.

6. Procédé selon la revendication 5, dans lequel la première information de configuration et la troisième information de configuration sont portées dans une signalisation de contrôle des ressources radio (RRC).

7. Procédé de planification semi-persistante, appliqué à un équipement utilisateur, ledit procédé comprenant :
réception (S801) de la quatrième information de configuration provenant d'une station de base, la quatrième information de configuration comprenant un pool de configuration SPS (planification semi-persistante), et le pool de configuration SPS comprenant une ou plusieurs périodicités SPS ainsi qu'un numéro d'indice correspondant à chaque périodicité SPS ;
réception (S802) de la cinquième information de configuration provenant de la station de base, la cinquième information de configuration comprenant un pool d'activation SPS, le pool d'activation SPS comprenant une ou plusieurs files périodiques SPS et un numéro d'indice correspondant à chaque file périodique SPS, chaque file périodique SPS indiquant au moins un numéro d'indice dans le pool de configuration SPS ainsi qu'un ordre de ce ou de ces numéros d'indice ;
réception (S803) de la sixième information de configuration provenant de la station de base, la sixième information de configuration indiquant un numéro d'indice correspondant à une file périodique SPS dans le pool d'activation SPS ;
détermination (S804), sur la base de la quatrième, de la cinquième et de la sixième information de configuration, d'une périodicité SPS correspondant au(x) numéro(s) d'indice ;
réception (S805), par l'utilisation séquentielle de la périodicité SPS correspondant au(x) numéro(s) d'indice dans l'ordre, des données programmées par la station de base à l'aide des ressources SPS ; et
après réception des données à l'aide d'une périodicité SPS correspondant au dernier numéro d'indice parmi le(s) numéro(s) d'indice, réception (S806), par l'utilisation répétée et séquentielle de la périodicité SPS correspondant au(x) numéro(s) d'indice dans l'ordre, des données programmées par la station de base à l'aide des ressources SPS.

8. Le procédé selon la revendication 7, dans lequel la détermination, sur la base de la quatrième, de la cinquième et de la sixième information de configuration, d'une périodicité SPS correspondant au(x) numéro(s) d'indice comprend :
détermination, sur la base de la cinquième et de la sixième information de configuration, de la file périodique SPS appartenant au pool d'activation SPS et correspondant au numéro d'indice indiqué par la sixième information de configuration ; et
détermination, sur la base de la quatrième information de configuration et de la file périodique SPS déterminée, de la périodicité SPS correspondant au(x) numéro(s) d'indice.

9. Le procédé selon la revendication 8, dans lequel la sixième information de configuration est portée dans une information de contrôle de liaison descendante (DCI).

10. Le procédé selon la revendication 9, dans lequel la sixième information de configuration est portée dans un champ d'accusé de réception de demande de répétition automatique hybride (HARQ) dans la DCI.

11. Le procédé selon la revendication 7 ou 8, dans lequel la sixième information de configuration est transportée dans un champ MAC CE (Media Access Control Control Element), ledit champ MAC CE étant défini par la station de base pour transmettre la sixième information de configuration.

12. Le procédé selon la revendication 11, dans lequel le procédé comprend en outre:
recevoir une septième information de configuration provenant de la station de base, ladite septième information de configuration indiquant une périodicité de cycle initiale dans laquelle l'équipement utilisateur reçoit des données qui sont programmées par la station de base au moyen des ressources SPS ; et
la périodicité du cycle initial indique le numéro d'index correspondant à la file périodique SPS dans le pool d'activation SPS.

13. Le procédé selon la revendication 12, dans lequel la quatrième information de configuration, la cinquième information de configuration et la septième information de configuration sont transportées dans une signalisation RRC (Radio Resource Control).

14. Un équipement utilisateur, l'équipement utilisateur étant configuré pour exécuter le procédé de semi-planification persistante selon l'une quelconque des revendications 1 à 6.

15. Un équipement utilisateur, l'équipement utilisateur étant configuré pour exécuter le procédé de semi-planification persistante selon l'une quelconque des revendications 7 à 13.
